# EUROPEAN PATENT SPECIFICATION

(11) **EP 3 934 174 B1**
(45) Date of publication and mention of the grant of the patent: **07.05.2025**
(21) Application number: 20777019.9
(22) Date of filing: 23.03.2020
(51) Int. Cl.: H04L 41/04, H04W 12/12, H04L 9/40, H04L 43/06, H04L 43/16, H04L 41/0816, H04L 41/0893, H04W 12/71

(54) **TERMINAL MANAGEMENT AND CONTROL METHOD, APPARATUS AND SYSTEM**
VERFAHREN, EINRICHTUNG UND SYSTEM ZUR VERWALTUNG UND STEUERUNG VON ENDGERÄTEN
PROCÉDÉ, APPAREIL ET SYSTÈME DE GESTION ET DE COMMANDE D'UN TERMINAL

(30) Priority: 22.03.2019 CN 201910224183
(43) Date of publication of application: 05.01.2022
(73) Proprietor: Huawei Technologies Co., Ltd., Shenzhen, Guangdong 518129 (CN)
(72) Inventor: MA, Jingwang, Shenzhen, Guangdong 518129 (CN)
(74) Representative: Epping - Hermann - Fischer
(86) International application number: PCT/CN2020/080639
(87) International publication number: WO 2020/192622

(56) References cited:
- CN-A- 102 118 836
- CN-A- 105 142 142
- CN-A- 107 332 639
- CN-A- 107 948 966
- CN-A- 108 289 318
- CN-A- 109 275 145
- US-A1- 2018 376 279
- "3rd Generation Partnership Project; Technical Specification Group Services and System Aspects; Service requirements for cyber-physical control applications in vertical domains; Stage 1 (Release 16)", 3GPP STANDARD; TECHNICAL SPECIFICATION; 3GPP TS 22.104, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V16.0.0, 4 January 2019 (2019-01-04), pages 1 - 55, XP051591592

## Description

### TECHNICAL FIELD

This application relates to the field of communication technologies, and in particular, to a terminal management and control method, a session management network element, and a user plane network element.

### BACKGROUND

A 5th generation (5th generation, 5G) communication system fully supports vertical fields, such as transportation, energy, video entertainment, industries, smart cities, healthcare, agriculture, finance, and education. In these fields, new technologies based on advanced 5G networks, sensors, artificial intelligence, Internet of Things, and the like greatly improve industry efficiency and bring infinite business opportunities. These new technologies are used in scenarios such as ports, hospitals, railways, and factories. Service requirements of the vertical industries are that a mobile network provides data connections that meet service requirements (on reliability, rate, and the like) and the network exposes capabilities to the vertical industries. In these vertical industries, a large quantity of terminals such as a mobile robot (mobile robot), an automated guided vehicle (automated guided vehicle, AGV), a vehicle (vehicle), a device on a train, a sensor (sensor), and a control device, are scattered. In the current technology, there is no corresponding method for managing and controlling communication behavior of these terminals.

Document CN 109 275 145 A refers to a method for handling rogue devices in a wireless communication network, the method includes: detecting an interactive behavior between a user equipment and a network-side device in the wireless communication network; determining whether the user equipment is a rogue device according to the interactive behavior; and transmitting identification information of the determined rogue device to the network-side device, for the network-side device to perform blocking processing on the rogue device.

### SUMMARY

The invention is defined by the independent claims. Preferred embodiments are defined by the dependent claims.

To manage and control a communication behavior of a terminal and ensure communication security of the terminal, this application provides a terminal management and control method, a session management network element, and a user plane network element. The present invention is defined by the attached set of claims. Embodiments and aspects which are not covered by the invention should be considered as examples useful for understanding the invention.

According to a first aspect, this application provides a terminal management and control method, including: A session management network element obtains authorized communication information of a first terminal or a terminal group, where the authorized communication information includes information about a device with which the first terminal or the terminal group is allowed to communicate; when the first terminal or a second terminal in the terminal group communicates with a device not listed in the authorized communication information, the session management network element learns that a management and control measure needs to be taken on communication of the first terminal or the second terminal; and the session management network element takes the management and control measure.

According to the foregoing method, the session management network element obtains the authorized communication information of the first terminal or the terminal group, and when the first terminal or the second terminal in the terminal group communicates with the device not listed in the authorized communication information, the session management network element learns that the management and control measure needs to be taken on the first terminal or the second terminal in the terminal group. According to the method, a terminal communicates with a device listed in the authorized communication information, and a communication behavior of the terminal is managed and monitored, thereby ensuring stability and security of terminal communication.

In a possible design, the management and control measure includes any one or more of the following: performing packet discarding processing on data, where the data is data exchanged by the first terminal or the second terminal with the device not listed in the authorized communication information; when a quantity of times that the first terminal or the second terminal in the terminal group communicates with the device not listed in the authorized communication information exceeds a preset value, performing the packet discarding processing on the data; performing reporting to a third-party device, where the third-party device is a device that manages the first terminal or the terminal group; and when the quantity of times that the first terminal or the second terminal in the terminal group communicates with the device not listed in the authorized communication information exceeds the preset value, performing the reporting to the third-party device.

In the foregoing possible design, the management and control measure includes performing the packet discarding processing on the data, and that the session management network element takes the management and control measure includes: The session management network element sends a notification to a user plane network element, where the notification is used to indicate to delete the data. In this way, after receiving the notification, the user plane network element deletes the data exchanged by the first terminal or the second terminal with the device not listed in the authorized communication information, so that the terminal communicates with the device listed in the authorized communication information, and the communication behavior of the terminal is managed and monitored, thereby ensuring stability and security of terminal communication.

In the foregoing possible design, the management and control measure includes performing the packet discarding processing on the data, and that the session management network element takes the management and control measure includes: The session management network element deletes the data. In this way, the session management network element deletes the data exchanged by the first terminal or the second terminal with the device not listed in the authorized communication information, so that the terminal communicates with the device listed in the authorized communication information, and the communication behavior of the terminal is managed and monitored, thereby ensuring stability and security of terminal communication.

In the foregoing possible design, the management and control measure includes performing the reporting to the third-party device, and the session management network element takes the management and control measure includes: The session management network element generates report information, and sends the report information to the third-party device, where the report information is used to indicate that the first terminal or the second terminal communicates with the device not listed in the authorized communication information; or the session management network element receives the report information from the user plane network element, and sends the report information to the third-party device. In this way, after learning of an exception, the third-party device may take a corresponding measure, for example, return the terminal to a factory for maintenance, so that the terminal communicates with the device listed in the authorized communication information, and the communication behavior of the terminal is managed and monitored, thereby ensuring stability and security of terminal communication.

In a possible design, that the session management network element learns that the management and control measure needs to be taken on the first terminal or the second terminal includes: The session management network element learns, by receiving the report information from the user plane network element, that the management and control measure needs to be taken on the first terminal or the second terminal, where the report information is used to indicate that the first terminal or the second terminal communicates with the device not listed in the authorized communication information.

In a possible design, that the session management network element learns that the management and control measure needs to be taken on the first terminal or the second terminal includes: The session management network element learns, by receiving the data, that the management and control measure needs to be taken on the first terminal or the second terminal, where the data is the data exchanged by the first terminal or the second terminal with the device not listed in the authorized communication information, and the data carries information about the device not listed in the authorized communication information.

In a possible design, the session management network element receives indication information from the third-party device, where the indication information is used to indicate that the management and control measure is taken when the first terminal or the second terminal communicates with the device not listed in the authorized communication information.

In the foregoing possible design, that the session management network element takes the management and control measure includes: The session management network element takes the management and control measure based on the indication information.

In a possible design, that the session management network element obtains the authorized communication information of the first terminal or the terminal group includes: The session management network element obtains the authorized communication information that is of the first terminal or the terminal group and that is from the third-party device; or the session management network element locally obtains the authorized communication information of the first terminal or the terminal group.

According to a second aspect, this application provides a terminal management and control method, including: A user plane network element obtains authorized communication information of a first terminal or a terminal group, where the authorized communication information includes information about a device with which the first terminal or the terminal group is allowed to communicate; the user plane network element detects that the first terminal or a second terminal in the terminal group communicates with a device not listed in the authorized communication information; and the user plane network element takes a management and control measure on communication of the first terminal or the second terminal.

According to the foregoing method, the user plane network element obtains the authorized communication information of the first terminal or the terminal group, and takes the management and control measure when detecting that the first terminal or the second terminal in the terminal group communicates with the device not listed in the authorized communication information. According to the method, a terminal communicates with a device listed in the authorized communication information, and a communication behavior of the terminal is managed and monitored, thereby ensuring stability and security of terminal communication.

In a possible design, that the user plane network element detects that the first terminal or a second terminal communicates with a device not listed in the authorized communication information includes: The user plane network element receives data, where the data is data exchanged by the first terminal or the second terminal with the device not listed in the authorized communication information, and the data carries information about the device not listed in the authorized communication information; and the user plane network element detects, based on the information about the device not listed in the authorized communication information, that the first terminal or the second terminal communicates with the device not listed in the authorized communication information.

In the foregoing possible design, the management and control measure includes any one or more of the following: performing packet discarding processing on the data; when a quantity of times that the first terminal or the second terminal in the terminal group communicates with the device not listed in the authorized communication information exceeds a preset value, performing the packet discarding processing on the data; performing reporting to a third-party device, where the third-party device is a device that manages the first terminal or the terminal group; and when the quantity of times that the first terminal or the second terminal in the terminal group communicates with the device not listed in the authorized communication information exceeds the preset value, performing the reporting to the third-party device.

When the management and control measure includes performing the packet discarding processing on the data, that the user plane network element takes a management and control measure includes: The user plane network element sends report information to a session management network element, where the report information is used to indicate that the first terminal or the second terminal communicates with the device not listed in the authorized communication information; the user plane network element receives a notification from the session management network element, where the notification is used to indicate to delete the data; and the user plane network element deletes the data based on the notification. In this way, after receiving the notification, the user plane network element deletes the data exchanged by the first terminal or the second terminal with the device not listed in the authorized communication information, so that the terminal communicates with the device listed in the authorized communication information, and the communication behavior of the terminal is managed and monitored, thereby ensuring stability and security of terminal communication.

When the management and control measure includes performing reporting to the third-party device, that the user plane network element takes a management and control measure includes: The user plane network element sends report information to the third-party device, where the report information is used to indicate that the first terminal or the second terminal communicates with the device not listed in the authorized communication information. In this way, after learning of an exception, the third-party device may take a corresponding measure, for example, return the terminal to a factory for maintenance, so that the terminal communicates with the device listed in the authorized communication information, and the communication behavior of the terminal is managed and monitored, thereby ensuring stability and security of terminal communication.

In a possible design, that the user plane network element obtains authorized communication information of a first terminal or a terminal group includes: The user plane network element obtains the authorized communication information that is of the first terminal or the terminal group and that is from the third-party device; or the user plane network element locally obtains the authorized communication information of the first terminal or the terminal group.

In a possible design, the user plane network element further receives indication information from a third-party device, where the indication information is used to indicate that the management and control measure is taken when the first terminal or the second terminal communicates with the device not listed in the authorized communication information.

In the foregoing possible design, that the user plane network element takes a management and control measure includes: The user plane network element takes the management and control measure based on the indication information.

In a possible design, the authorized communication information according to the first aspect or the second aspect includes any one or more of the following: an identifier of a device with which the first terminal or the terminal group is allowed to communicate; an internet protocol IP address of a device with which the first terminal or the terminal group is allowed to communicate; a media access control MAC address of a device with which the first terminal or the terminal group is allowed to communicate; an identifier of an application with which the first terminal or the terminal group is allowed to communicate; and a server network address of an application with which the first terminal or the terminal group is allowed to communicate.

According to a third aspect, this application provides a session management network element. The session management network element has a function of implementing the method in the first aspect. The function may be implemented by hardware, or may be implemented by hardware by executing corresponding software. The hardware and software include one or more modules corresponding to the foregoing function.

In a possible design, a structure of the session management network element includes a processing unit and a communication unit. The processing unit is configured to support the session management network element in performing the method in the first aspect, and the communication unit is configured to support communication between the session management network element and another device. The session management network element may further include a storage unit, where the storage unit is configured to be coupled to the processing unit, and stores program instructions and data that are necessary for the session management network element. In an example, the processing unit may be a processor, the communication unit may be a transceiver, and the storage unit may be a memory.

In the foregoing possible design, the communication unit includes a receiving unit and a sending unit. These units may perform the method in the first aspect. For details, refer to detailed descriptions in the method example. Details are not described again.

According to a fourth aspect, this application provides an apparatus (for example, the apparatus may be a chip system). The apparatus includes a processor, and may perform the method in the first aspect.

In a possible design, the apparatus further includes a memory, where the memory is configured to store necessary program instructions and data.

According to a fifth aspect not covered by the claims, this application further provides a computer program product. When the computer program product runs on a computer, the computer is enabled to perform the method in the first aspect.

According to a sixth aspect not covered by the claims, a computer-readable storage medium is provided. The computer-readable storage medium stores instructions. When the instructions are run on a computer, the computer is enabled to perform the method in the first aspect.

According to a seventh aspect, this application provides a user plane network element. The user plane network element has a function of implementing the method in the second aspect. The function may be implemented by hardware, or may be implemented by hardware by executing corresponding software. The hardware and software include one or more modules corresponding to the foregoing function.

In a possible design, a structure of the user plane network element includes a processing unit and a communication unit. The processing unit is configured to support the user plane network element in performing the method in the second aspect, and the communication unit is configured to support communication between the user plane network element and another device. The user plane network element may further include a storage unit, where the storage unit is configured to be coupled to the processing unit, and stores program instructions and data that are necessary for the user plane network element. In an example, the processing unit may be a processor, the communication unit may be a transceiver, and the storage unit may be a memory.

In the foregoing possible design, the communication unit includes a receiving unit and a sending unit. These units may perform the method in the second aspect. For details, refer to detailed descriptions in the method example. Details are not described again.

According to an eighth aspect, this application provides an apparatus (for example, the apparatus may be a chip system). The apparatus includes a processor, and may perform the method in the second aspect.

In a possible design, the apparatus further includes a memory, where the memory is configured to store necessary program instructions and data.

According to a ninth aspect not covered by the claims, this application further provides a computer program product. When the computer program product runs on a computer, the computer is enabled to perform the method in the second aspect.

According to a tenth aspect not covered by the claims, a computer-readable storage medium is provided. The computer-readable storage medium stores instructions. When the instructions are run on a computer, the computer is enabled to perform the method in the second aspect.

According to an eleventh aspect not covered by the claims, this application provides a communication system. The system includes one or both of the session management network element in the first aspect and the user plane network element in the second aspect.

In a possible design, the communication system may further include another device that interacts with the session management network element and the user plane network element in the solutions provided in the embodiments of this application, for example, a third-party device or a terminal.

### BRIEF DESCRIPTION OF DRAWINGS

FIG. 1 is a schematic diagram of a network architecture according to an embodiment of this application;
FIG. 2 is a schematic diagram of a 5G network architecture according to an embodiment of this application;
FIG. 3 is a flowchart of a terminal management and control method according to an embodiment of this application;
FIG. 4 is a flowchart of another terminal management and control method according to an embodiment of this application;
FIG. 5 is a flowchart of another terminal management and control method according to an embodiment of this application;
FIG. 6 is a flowchart of another terminal management and control method according to an embodiment of this application;
FIG. 7 is a schematic structural diagram of a communication device according to an embodiment of this application;
FIG. 7a is a schematic structural diagram of a session management network element according to an embodiment of this application;
FIG. 7b is a schematic structural diagram of a user plane network element according to an embodiment of this application; and
FIG. 8 is a schematic structural diagram of another communication device according to an embodiment of this application.

### DESCRIPTION OF EMBODIMENTS

To make objectives, technical solutions, and advantages of this application clearer, the following describes the technical solutions in the embodiments of this application with reference to accompanying drawings. In the descriptions of this application, "/" represents an "or" relationship between associated objects unless otherwise specified. For example, A/B may represent A or B. The term "and/or" indicates only an association relationship for describing associated objects and indicates that three relationships may exist. For example, A and/or B may indicate the following three cases: Only A exists, both A and B exist, and only B exists, where A and B may be singular or plural. In addition, in the descriptions of this application, unless otherwise specified, "a plurality of" means two or more than two. The term "at least one item (piece) of the following" or a similar expression thereof refers to any combination of these items, including any combination of a singular item (piece) or plural items (pieces). For example, at least one of a, b, or c may indicate: a, b, c, a and b, a and c, b and c, or a, b, and c, where a, b, and c may be singular or plural. In addition, to clearly describe the technical solutions in the embodiments of this application, terms such as "first" and "second" are used in the embodiments of this application to distinguish between functions and purposes. A person skilled in the art may understand that the terms such as "first" and "second" do not intend to limit a quantity or an execution sequence, and the terms such as "first" and "second" do not indicate a definite difference.

The technical solutions in the embodiments of this application may be used in various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunication system, UMTS) system, a worldwide interoperability for microwave access (worldwide interoperability for microwave access, WiMAX) communication system, and a future 5th generation (5th generation, 5G) system or new radio (new radio, NR) system.

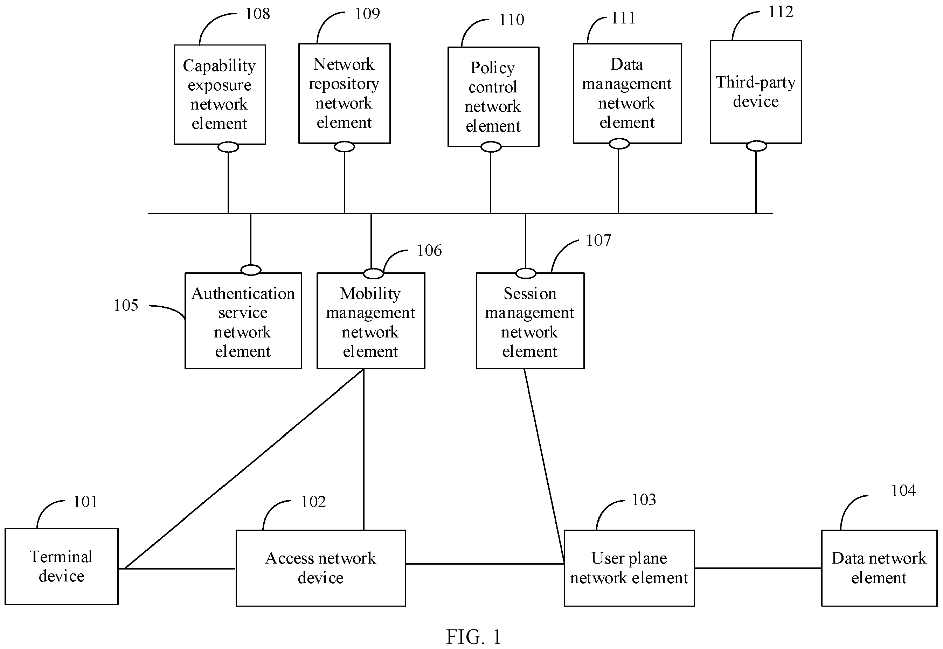

FIG. 1 is a schematic diagram of a possible network architecture to which this application is applicable. The network architecture includes a terminal device 101, an access network device 102, a user plane network element 103, a data network element 104, an authentication service network element 105, a mobility management network element 106, a session management network element 107, a capability exposure network element 108, a network repository network element 109, a policy control network element 110, a data management network element 111, and a third-party device 112, which are separately described below:
1. The terminal device (terminal device, TD) 101 is referred to as a terminal for short, and is a device having a wireless transceiver function. The terminal device may include various handheld devices, vehicle-mounted devices, wearable devices, or computing devices that have a wireless communication function, or other processing devices connected to a wireless modem, and terminals in various forms, such as a mobile station (mobile station, MS), a terminal (terminal), user equipment (user equipment, UE), and a software client. The terminal may be deployed on land, including an indoor device, an outdoor device, a handheld device, or a vehicle-mounted device; or may be deployed on water (for example, on a ship), or may be deployed in the air (for example, on a plane, a balloon, or a satellite). For example, the terminal may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), or a wireless terminal in smart home.
2. The (radio) access network (radio access network, (R)AN) device 102 is a device that provides a wireless communication function for a terminal, and includes but is not limited to a next-generation nodeB (g nodeB, gNB) in 5G, an evolved NodeB (evolved node B, eNB), a radio network controller (radio network controller, RNC), a NodeB (node B, NB), a base station controller (base station controller, BSC), a base transceiver station (base transceiver station, BTS), a home base station (for example, home evolved nodeB, or home node B, HNB), a baseband unit (baseband unit, BBU), a transmission reception point (transmitting and receiving point, TRP), a transmitting point (transmitting point, TP), and the like.
3. The user plane network element 103 is used for packet routing and forwarding, quality of service (quality of service, QoS) processing of user plane data, and the like. In a 5G network, the user plane network element may be a user plane function (user plane function, UPF) network element. In a future communication system, the user plane network element may still be the UPF network element, or may have another name. This is not limited in this application.
4. The data network element 104 is configured to provide a network for data transmission. In the 5G network, the data network element may be a data network (data network, DN) element. In the future communication system, the data network element may still be the DN network element, or may have another name. This is not limited in this application.
5. The authentication service network element 105 is configured to implement user authentication, user authorization, and the like. In the 5G network, the authentication service network element may be an authentication server function (authentication server function, AUSF) network element. In the future communication system, the authentication service network element may still be the AUSF network element, or may have another name. This is not limited in this application.
6. The mobility management network element 106 is mainly configured to perform terminal access management and mobility management. In a 4G network, the mobility management network element may be a mobility management entity (mobility management entity, MME). In the 5G network, the mobility management network element may be an access management function (access and mobility management function, AMF) network element. In the future communication system, the mobility management network element may still be the AMF network element, or may have another name. This is not limited in this application.
7. The session management network element 107 is mainly configured to manage a session, assign and manage an internet protocol (internet protocol, IP) address of a terminal device, select an endpoint that can manage a user plane function interface and a policy control and charging function interface, notify downlink data, and the like. In the 5G network, the session management network element may be a session management function (Session Management Function, SMF) network element. In the future communication system, the session management network element may still be the SMF network element, or may have another name. This is not limited in this application.
8. The capability exposure network element 108 is configured to securely expose, to the outside, a service, a capability, and the like that are provided by a 3GPP network function network element. In the 4G network, the network exposure network element may be a service capability exposure function (service capability exposure function, SCEF) network element. In the 5G network, the network exposure network element may be a network exposure function (network exposure function, NEF) network element. In the future communication system, the network exposure network element may still be the NEF network element, or may have another name. This is not limited in this application.
9. The network repository network element 109 is configured to store information of a network function deployed in a core network, and provide discovery of a network function, a service, and the like. In the 5G network, the network repository network element may be a network repository function (network repository function, NRF) network element. In the future communication system, the network repository network element may still be the NRF network element, or may have another name. This is not limited in this application.
10. The policy control network element 110 is configured to guide a unified policy framework of network behavior, provide policy rule information for a control plane function network element (such as an AMF or an SMF network element), and the like. In the 5G network, the policy control network element may be a policy control function (policy control function, PCF) network element. In the future communication system, the policy control network element may still be the PCF network element, or may have another name. This is not limited in this application.
11. The data management network element 111 is configured to process a user identity, perform access authentication, registration, mobility management, and the like. In the 4G network, the data management network element may be a home subscriber server (home subscriber server, HSS). In the 5G network, the data management network element may be a unified data management (unified data management, UDM) network element. In the future communication system, the unified data management may still be the UDM network element, or may have another name. This is not limited in this application.
12. The third-party device 112 is a device configured to manage the terminal 101, and the third-party device 112 stores attribute information of the managed terminal, for example, location information and a type of the terminal. It should be noted that, an example in which the network architecture of this application includes one terminal 101 is used for illustration. In actual application, the network architecture may include a plurality of terminals. Correspondingly, the plurality of terminals may all be managed by the third-party device 112. Certainly, the plurality of terminals may also be managed by different third-party devices. Specifically, the third-party device 112 is connected to the capability exposure network element through an application interface provided by the capability exposure network element, and manages the terminal 101 by using the capability exposure network element. For example, the third-party device 112 may be a server device or an application function (application function, AF) network element of a vertical industry control center.

It should be noted that the network elements in the embodiments of this application may also be referred to as functions or function entities. For example, the mobility management network element may also be referred to as a mobility management function or a mobility management function entity, and the data management network element may also be referred to as a data management function or a data management function entity. The name of each network element is not limited in this application. A person skilled in the art may change the names of the foregoing network elements to other names to perform same functions. This falls within the protection scope of this application.

It may be understood that the foregoing network elements or functions may be network elements in a hardware device, may be software functions running on dedicated hardware, or may be virtualized functions instantiated on a platform (for example, a cloud platform).

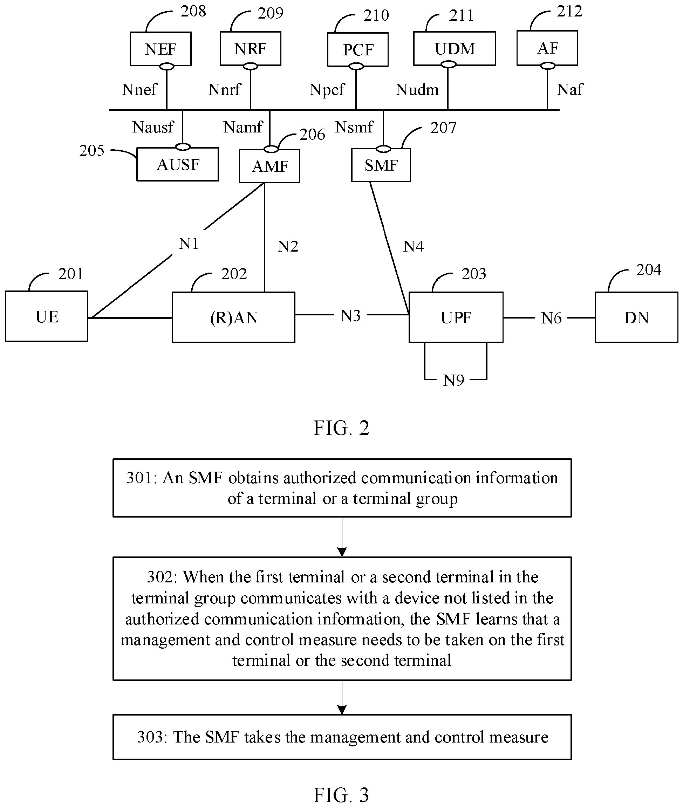

FIG. 2 is a schematic diagram of another possible network architecture to which this application is applicable. In FIG. 2, a 5G network architecture is used as an example. The network architecture includes: a terminal device 101, a (R)AN 202, a UPF network element 203, a DN network element 204, an AUSF network element 205, an AMF network element 206, an SMF network element 207, an NEF network element 208, an NRF network element 209, a PCF network element 120, a UDM network element 211, and an AF network element 212. The UPF network element 203, the DN network element 204, the AUSF network element 205, the AMF network element 206, the SMF network element 207, the NEF network element 208, the NRF network element 209, the PCF network element 120, the UDM network element 211, and the AF network element 212 are briefly referred to as the UPF 203, the DN 204, the AUSF 205, the AMF 206, the SMF 207, the NEF 208, the NRF 209, the PCF 120, the UDM 211, and the AF 212 below. The access network device in the network architecture shown in FIG. 1 may be the (R)AN 202 in the network architecture shown in FIG. 2. The user plane network element 103 in the network architecture shown in FIG. 1 may be the UPF 203 in the network architecture shown in FIG. 2. The data network element 104 in the network architecture shown in FIG. 1 may be the DN 204 in the network architecture shown in FIG. 2. The authentication service network element 105 in the network architecture shown in FIG. 1 may be the AUSF 205 in the network architecture shown in FIG. 2. The mobility management network element 106 in the network architecture shown in FIG. 1 may be the AMF 206 in the network architecture shown in FIG. 2. The session management network element 107 in the network architecture shown in FIG. 1 may be the SMF 207 in the network architecture shown in FIG. 2. The capability exposure network element 108 in the network architecture shown in FIG. 1 may be the NEF 208 in the network architecture shown in FIG. 2. The network repository network element 109 in the network architecture shown in FIG. 1 may be the NRF 209 in the network architecture shown in FIG. 2. The policy control network element 110 in the network architecture shown in FIG. 1 may be the PCF 210 in the network architecture shown in FIG. 2. The data management network element 111 in the network architecture shown in FIG. 1 may be the UDM 211 in the network architecture shown in FIG. 2. The third-party device 112 in the network architecture shown in FIG. 1 may be the AF 212 in the network architecture shown in FIG. 2. For a function of each network element, refer to the description in FIG. 1. Details are not described herein again.

In the network architecture, Nausf is a service-based interface presented by the AUSF 105, Namf is a service-based interface presented by the AMF 106, Nsmf is a service-based interface presented by the SMF 107, Nnef is a service-based interface presented by the NEF 108, Nnrf is a service-based interface presented by the NRF 109, Npcf is a service-based interface presented by the PCF 110, Nudm is a service-based interface presented by the UDM 111, and Naf is a service-based interface presented by the AF 112. N1 is a reference point between the UE 101 and the AMF 106. N2 is a reference point between the (R)AN 102 and the AMF 106, and is configured to send a non-access stratum (Non-access stratum, NAS) message and the like. N3 is a reference point between the (R)AN 102 and the UPF 103, and is configured to transmit user plane data and the like. N4 is a reference point between the SMF 107 and the UPF 103, and is configured to transmit information such as tunnel identifier information, data buffer indication information, and a downlink data notification message of an N3 connection. The N6 interface is a reference point between the UPF 103 and the DN 104, and is configured to transmit user plane data and the like.

It should be understood that the foregoing network architecture applied to this embodiment of this application is merely an example of a network architecture described from a perspective of a service architecture, and a network architecture applicable to this embodiment of this application is not limited thereto. Any network architecture that can implement functions of the foregoing network elements is applicable to this embodiment of this application.

The following describes, by using the network architecture shown in FIG. 2 as an example, a terminal monitoring method provided in the embodiments of this application. In other words, an example in which the session management network element is an SMF, the policy control network element is a PCF, the data management network element is a UDM, the capability exposure network element is an NEF, and the user plane network element is a UPF is used for description.

FIG. 3 shows a terminal management and control method provided in an embodiment of this application. The method includes the following steps.

S301: An SMF obtains authorized communication information (authorized communication information) of a terminal (for example, a first terminal) or a terminal group.

When the SMF obtains the authorized communication information of the first terminal, the authorized communication information includes an identifier of the first terminal and information about a device with which the first terminal is allowed to communicate. The information about the device with which the first terminal is allowed to communicate may be, for example, one or more of an identifier (identity, ID), an internet protocol (internet protocol, IP) address, a media access control (media access control, MAC) address, an application identifier (application identifier), or an application server network address of the device with which the first terminal is allowed to communicate. It may be understood that the authorized communication information may include a list of information about devices with which the first terminal is allowed to communicate, and the list of the information about the devices with which the first terminal is allowed to communicate may be, for example, one or more of a list of identifiers, a list of IP addresses, a list of MAC addresses, a list of application identifiers, or a list of application server network addresses of the devices with which the first terminal is allowed to communicate.

When the SMF obtains the authorized communication information of the terminal group, the authorized communication information includes a terminal group identifier (group identifier, group ID) and information about a device with which the terminal group is allowed to communicate. The information about the device with which the terminal group is allowed to communicate may be, for example, one or more of an identifier, an IP address, a MAC address, an application identifier, or an application server network address of the device with which the terminal group is allowed to communicate. It may be understood that the authorized communication information may include a list of information about devices with which the terminal group is allowed to communicate, and the list of the information about the devices with which the terminal group is allowed to communicate may be, for example, one or more of a list of identifiers, a list of IP addresses, a list of MAC addresses, a list of application identifiers, or a list of application server network addresses of the devices with which the terminal group is allowed to communicate.

How the SMF obtains the authorized communication information of the first terminal or the terminal group is not limited in this embodiment of this application. The following describes two methods for the SMF to obtain the authorized communication information of the first terminal or the terminal group.

Method 1: A PCF sends the authorized communication information of the first terminal or the terminal group to the SMF, so that the SMF receives the authorized communication information that is of the first terminal or the terminal group and that is from the PCF. For example, the PCF generates a session control policy (session management policy, SM policy) based on the authorized communication information, and sends the authorized communication information to the SMF by using an SM policy control update notification (Npef_SM policy control_update notify) message. Certainly, the PCF may alternatively send the authorized communication information to the SMF by using another message or a new message. This is not limited in this application.

Method 2: The SMF locally obtains the authorized communication information based on the identifier of the first terminal or the identifier of the terminal group. The authorized communication information locally stored in the SMF may be preconfigured by the PCF for the SMF by using the SM policy control update notification message. Certainly, the authorized communication information locally stored in the SMF may alternatively be preconfigured by the PCF for the SMF by using another message or a new message. This is not limited in this application.

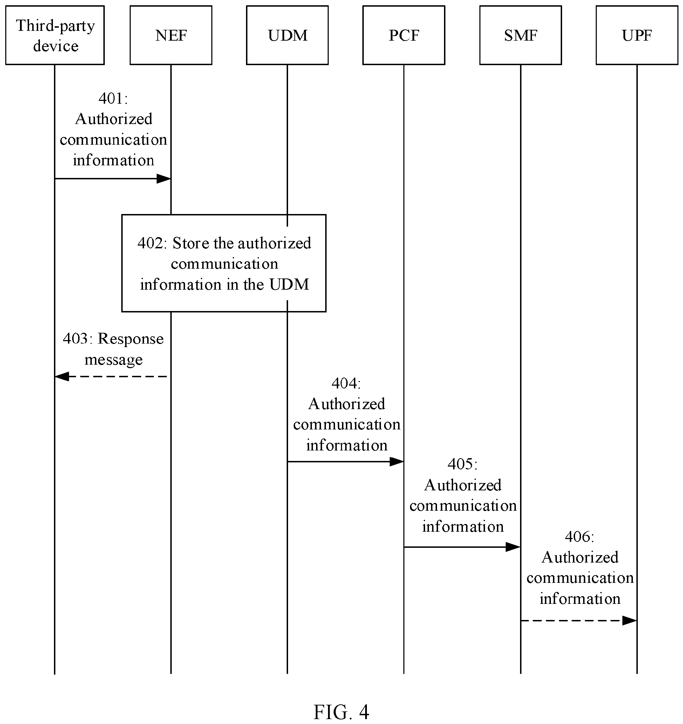

For details about how the PCF sends the authorized communication information to the SMF by using the SM policy control update notification message in Method 1 and Method 2, refer to the embodiment shown in FIG. 4. Details are not described herein again.

In an example, the SMF further obtains indication information. The SMF may obtain the indication information when obtaining the authorized communication information. The indication information is used to indicate that a management and control measure is taken when the first terminal or a second terminal communicates with a device not listed in the authorized communication information. For details about the management and control measure, refer to S302 below.

S302: When the first terminal or the second terminal in the terminal group communicates with the device not listed in the authorized communication information, the SMF learns that the management and control measure needs to be taken on communication of the first terminal or the second terminal.

The management and control measure is specific to the communication of the first terminal or the second terminal. The communication of the first terminal or the second terminal specifically refers to a behavior that the first terminal or the second terminal accesses another device (that is, sends data) or accepts access (that is, receives data) of another device. The management and control measure may specifically include any one or more of the following: performing packet discarding processing on data; when a quantity of times that the first terminal or the second terminal in the terminal group communicates with the device not listed in the authorized communication information exceeds a preset value, performing the packet discarding processing on the data; performing reporting to a third-party device; when the quantity of times that the first terminal or the second terminal in the terminal group communicates with the device not listed in the authorized communication information exceeds the preset value, performing the reporting to the third-party device. The data is data exchanged by the first terminal or the second terminal with the device not listed in the authorized communication information, and the third-party device manages the first terminal or the terminal group. The SMF may obtain the preset value when obtaining the authorized communication information.

How the SMF learns that the management and control measure needs to be taken on the first terminal or the second terminal is not limited in this embodiment of this application. The following describes three methods for the SMF to learn that the management and control measure needs to be taken on the first terminal or the second terminal.

Method 1: A UPF detects that the first terminal or the second terminal communicates with the device not listed in the authorized communication information, and reports report information (report information) to the SMF, so that the SMF receives the report information from the UPF.

The UPF detects that the first terminal or the second terminal communicates with the device not listed in the authorized communication information, and generates the report information, where the report information is used to indicate that the first terminal or the second terminal communicates with the device not listed in the authorized communication information, and includes exception event description information (event report description information) and the identifier of the first terminal or an identifier of the second terminal. Optionally, the report information further includes any one or more of location information (Location Information) of the first terminal or the second terminal, information of the device not listed in the authorized communication information (for example, an IP address, a MAC address, an application identifier, or an application server network address of the device not listed in the authorized communication information), a type of the first terminal or the second terminal, or a reference point session identifier (for example, an N4 session ID). The exception event description information is, for example, information indicating that the first terminal or the second terminal communicates with the device not listed in the authorized communication information. Optionally, the exception event description information further includes a quantity of times that the exception event occurs. When the report information indicates that the second terminal communicates with the device not listed in the authorized communication information, the report information may further include an identifier of a group in which the second terminal is located.

Specifically, the UPF detects data exchanged by the first terminal or the second terminal with the device not listed in the authorized communication information, matches the data with the authorized communication information, and finds that the data carries information about the device not listed in the authorized communication information, for example, an identifier, an IP address, a MAC address, an application identifier, or an application server network address of the device not listed in the authorized communication information, to detect that the first terminal or the second terminal communicates with the device not listed in the authorized communication information. When the UPF detects that the second terminal communicates with the device not listed in the authorized communication information, the UPF further determines the authorized communication information of the terminal group based on an identifier that is of the terminal group and that is carried in the data.

In an example of Method 1, if the SMF receives the indication information in S301, after receiving the report information from the UPF, the SMF learns, based on the indication information, that the management and control measure needs to be taken on the first terminal or the second terminal.

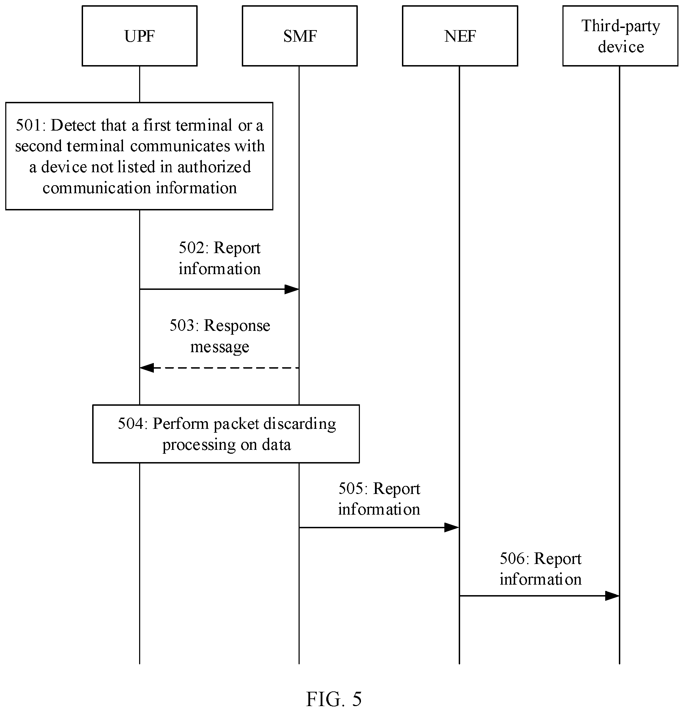

For other content, refer to the embodiment shown in FIG. 5. Details are not described herein again.

Method 2: A UPF detects that the first terminal or the second terminal communicates with the device not listed in the authorized communication information, and sends a management and control request to the SMF, so that the SMF receives the management and control request from the UPF. The management and control request is used to indicate that the management and control measure needs to be taken on the first terminal or the second terminal. Specifically, for details about how the UPF detects that the first terminal or the second terminal communicates with the device not listed in the authorized communication information, refer to the description in Method 1.

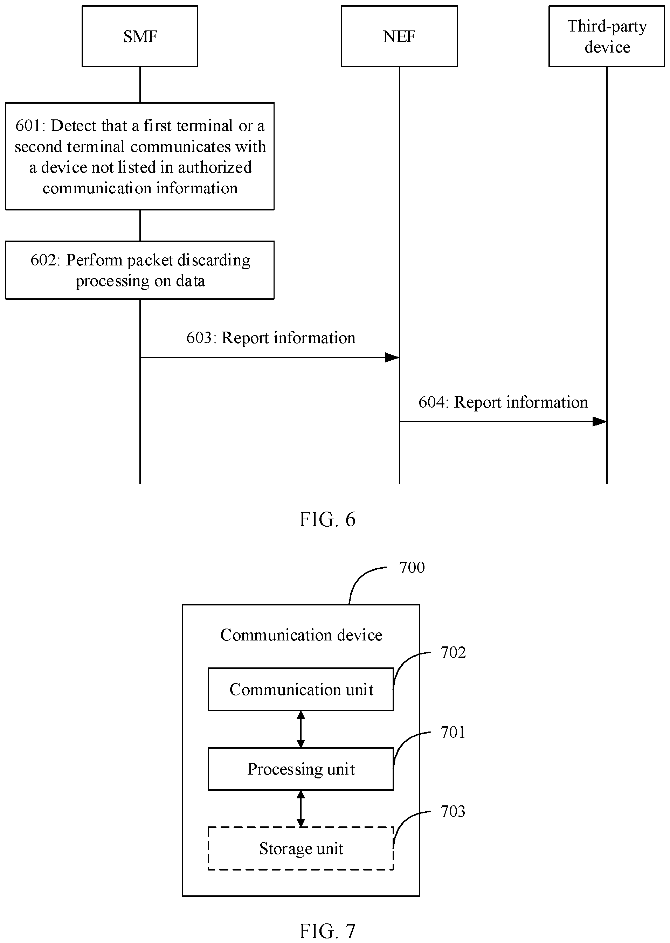

Method 3: The SMF detects that the first terminal or the second terminal communicates with the device not listed in the authorized communication information. For details, refer to the embodiment shown in FIG. 6. Details are not described herein again.

Specifically, the SMF detects data exchanged by the first terminal or the second terminal with the device not listed in the authorized communication information, matches device information carried in the data with the authorized communication information, and finds that the data carries information about the device not listed in the authorized communication information, for example, an identifier, an IP address, a MAC address, an application identifier, or an application server network address of the device not listed in the authorized communication information, to detect that the first terminal or the second terminal communicates with the device not listed in the authorized communication information. When the SMF detects that the second terminal communicates with the device not listed in the authorized communication information, the SMF further determines the authorized communication information of the terminal group based on an identifier that is of the terminal group and that is carried in the data.

In an example of Method 3, if the SMF receives the indication information in S301, after detecting that the first terminal or the second terminal communicates with the device not listed in the authorized communication information, the SMF learns, based on the indication information, that the management and control measure needs to be taken on the first terminal or the second terminal.

S303: The SMF takes the management and control measure.

If the management and control measure includes performing the packet discarding processing on the data (including performing the packet discarding processing on the data for more than the preset quantity of times), the data is data exchanged by the first terminal or the second terminal with the device not listed in the authorized communication information.

How the SMF performs the packet discarding processing on the data is not limited in this embodiment of this application. The following describes two methods for the SMF to perform the packet discarding processing on the data.

Method 1: After receiving the report information or the management and control request from the UPF, the SMF instructs the UPF to delete the data exchanged by the first terminal or the second terminal with the device not listed in the authorized communication information. After receiving the notification from the SMF, the UPF deletes the data.

It should be noted that Method 1 corresponds to Method 1 and Method 2 by using which the SMF learns that the management and control measure needs to be taken on the first terminal or the second terminal in S302.

Method 2: The SMF deletes the data exchanged by the first terminal or the second terminal with the device not listed in the authorized communication information.

It should be noted that Method 2 corresponds to Method 3 by using which the SMF learns that the management and control measure needs to be taken on the first terminal or the second terminal in S302.

If the management and control measure includes performing the reporting to the third-party device (including performing the reporting to the third-party device for more than the preset quantity of times), how the SMF performs the reporting to the third-party device is not limited in this embodiment of this application. The following describes two methods for the SMF to perform the packet discarding processing on the data.

Method 1: The SMF forwards, the report information received from the UPF, to the third-party device. Specifically, the SMF sends the report information to an NEF, and the NEF forwards the report information to the third-party device.

It should be noted that Method 1 corresponds to Method 1 by using which the SMF learns that the management and control measure needs to be taken on the first terminal or the second terminal in S302.

For other content, refer to the embodiment shown in FIG. 5. Details are not described herein again.

Method 2: The SMF generates the report information, and sends the report information to the third-party device. Specifically, the SMF sends the report information to an NEF, and the NEF forwards the report information to the third-party device.

It should be noted that Method 1 corresponds to Method 2 and Method 3 by using which the SMF learns that the management and control measure needs to be taken on the first terminal or the second terminal in S302.

For other content, refer to the embodiment shown in FIG. 6. Details are not described herein again.

According to the foregoing methods, the SMF obtains the authorized communication information of the first terminal or the terminal group, and when the first terminal or the second terminal in the terminal group communicates with the device not listed in the authorized communication information, the SMF learns that the management and control measure needs to be taken on the first terminal or the second terminal in the terminal group. According to the method, a terminal communicates with a device listed in the authorized communication information, and a communication behavior of the terminal is managed and monitored, thereby ensuring stability and security of terminal communication.

Based on the embodiment in FIG. 3, FIG. 4 provides a terminal management and control method, so that an SMF and a UPF obtain authorized communication information of a first terminal or a terminal group. The method includes the following steps.

S401: A third-party device provides, for an NEF, the authorized communication information that is of the first terminal or the terminal group and that needs to be configured, so that the NEF receives the authorized communication information that is of the first terminal or the terminal group and that is from the third-party device.

For a description of the authorized communication information, refer to S301. Details are not described herein again.

In an example, the third-party device further provides indication information for the NEF. Specifically, the indication information may include a first indication (action 1) and/or a second indication (action 2). The first indication is used to indicate that packet discarding processing is performed on data when the first terminal or a second terminal in the terminal group communicates with a device not listed in the authorized communication information, and the second indication is used to indicate that reporting is performed to the third-party device when the first terminal or the second terminal in the terminal group communicates with the device not listed in the authorized communication information. It should be noted that the first indication and the second indication may be the same indication, that is, one indication may be used to indicate that the packet discarding processing is performed on the data when the first terminal or the second terminal in the terminal group communicates with the device not listed in the authorized communication information, and may also be used to indicate that the reporting is performed to the third-party device when the first terminal or the second terminal in the terminal group communicates with the device not listed in the authorized communication information. The first indication and the second indication in the following may also be the same indication. A general description is provided herein, and details are not described below.

In an example, the third-party device provides the authorized communication information of the first terminal or the terminal group for the NEF by using a specified parameter update request (Nnef_parameter provision_update request) message.

S402: The NEF stores, in a UDM, the authorized communication information that is of the first terminal or the terminal group and that needs to be configured.

In an example, the authorized communication information of the first terminal or the terminal group is stored in the UDM as a part of user subscription data or user group subscription data.

In an example, the NEF further stores the indication information in the UDM, or stores the indication information in the UDM as a part of the user subscription data or the user group subscription data. Specifically, the indication information may include the first indication and/or the second indication.

Further, the UDM may store the authorized communication information of the first terminal or the terminal group in the UDR.

S403: Optionally, the NEF returns a response message to the third-party device.

The response message is used to reply the third-party device, to indicate that the operation of configuring the authorized communication information is completed.

In an example, the NEF returns the response message to the third-party device by using a specified parameter update response (Nnef_parameter provision_update request response) message.

S404: The UDM sends the authorized communication information of the first terminal or the terminal group to a PCF, so that the PCF receives the authorized communication information that is of the first terminal or the terminal group and that is from the UDM.

In an example, the UDM uses the authorized communication information of the first terminal or the terminal group as the user subscription data or the user group subscription data of the first terminal, and sends the authorized communication information of the first terminal or the terminal group to the PCF.

In an example, the UDM further sends the indication information to the PCF, or uses the indication information as the user subscription data or the user group subscription data of the first terminal and sends the indication information to the PCF. Specifically, the indication information may include the first indication and/or the second indication.

In an example, the UDM sends the authorized communication information of the first terminal or the terminal group to the PCF by using a service operation getting (Nudm_SDM_get service operation) message.

S405: The PCF sends the authorized communication information of the first terminal or the terminal group to the SMF, so that the SMF receives the authorized communication information that is of the first terminal or the terminal group and that is from the PCF.

In an example, the PCF generates a session management policy (session management policy, SM policy) based on the authorized communication information of the first terminal or the terminal group, and sends the SM policy to the SMF. The SM policy includes the authorized communication information of the first terminal or the terminal group.

In the foregoing example, the PCF further generates the SM policy based on the indication information, and sends the SM policy to the SMF. The SM policy includes the authorized communication information and the indication information of the first terminal or the terminal group.

In an example, the PCF sends the authorized communication information to the SMF by using an SM policy control update notification (Npcf_SM policy control_update notify) message.

In an example, the SMF stores the authorized communication information of the first terminal or the terminal group, and optionally, further stores the indication information. The indication information may include the first indication and/or the second indication.

S406. Optionally, the SMF sends the authorized communication information of the first terminal or the terminal group to the UPF, so that the UPF receives the authorized communication information that is of the first terminal or the terminal group and that is from the SMF.

In an example, the SMF sends the SM policy to the UPF.

In an example, the UPF stores the authorized communication information of the first terminal or the terminal group, and optionally, further stores the indication information. The indication information may include the first indication and/or the second indication.

According to the foregoing method, the third-party device provides the authorized communication information of the first terminal or the terminal group, so that the SMF and the UPF obtain the information about the device with which the first terminal or the terminal in the terminal group is allowed to communicate, and subsequently, when the first terminal or the second terminal communicates with the device not listed in the authorized communication information, the management and control measure can be taken.

Based on the embodiments in FIG. 3 and FIG. 4, FIG. 5 provides a terminal management and control method. In this method, a UPF detects that a first terminal or a second terminal communicates with a device not listed in authorized communication information, so that the UPF and an SMF perform packet discarding processing on data and perform reporting to a third-party device. The method includes the following steps.

S501: The UPF detects that the first terminal or the second terminal communicates with the device not listed in the authorized communication information.

Specifically, when receiving uplink data from the first terminal or the second terminal, the UPF matches device information carried in the uplink data with the authorized communication information, and finds that the uplink data carries information about the device not listed in the authorized communication information, for example, an identifier, an IP address, a MAC address, an application identifier, or an application server network address of the device not listed in the authorized communication information, to detect that the first terminal or the second terminal accesses the device not listed in the authorized communication information. When the UPF detects that the second terminal accesses the device not listed in the authorized communication information, the uplink data further carries an identifier of a terminal group, and the UPF determines authorized communication information of the terminal group based on the identifier of the terminal group.

When receiving downlink data sent by a device to the first terminal or the second terminal, the UPF matches device information carried in the downlink data with the authorized communication information, and finds that the downlink data carries information about the device not listed in the authorized communication information, for example, an identifier, an IP address, a MAC address, an application identifier, or an application server network address of the device not listed in the authorized communication information, to detect that the first terminal or the second terminal accepts access of the device not listed in the authorized communication information. When the UPF detects that the second terminal accepts access of the device not listed in the authorized communication information, the downlink data further carries the identifier of the terminal group, and the UPF determines the authorized communication information of the terminal group based on the identifier of the terminal group.

S502: The UPF reports report information to the SMF, so that the SMF receives the report information from the UPF.

The report information is used to indicate that the first terminal or the second terminal communicates with the device not listed in the authorized communication information. For the report information, refer to the description in Method 1 in S302. Details are not described herein again.

In an example, the UPF performs reporting to the third-party device based on a second indication. Specifically, the UPF sends the report information to the SMF based on the second indication, the SMF sends the report information to the NEF based on the second indication, and the NEF forwards the report information to the third-party device.

In an example, the UPF reports the report information to the SMF by using a session event report (session event report) message.

S503: Optionally, the SMF acknowledges the report information to the UPF, and returns a response message to the UPF, so that the UPF receives the response message from the SMF.

In an example, the UPF acknowledges the report information to the UPF by using a session event response (session event response) message.

S504: After determining the report information, the SMF performs the packet discarding processing on the data, where the data is data exchanged by the first terminal or the second terminal with the device not listed in the authorized communication information.

Specifically, the SMF sends a notification to the UPF. After receiving the notification from the SMF, the UPF deletes the data exchanged by the first terminal or the second terminal with the device not listed in the authorized communication information.

It should be noted that, in this scenario of this embodiment in this application, performing the packet discarding processing on the data includes that the SMF instructs the UPF to delete the data exchanged by the first terminal or the second terminal with the device not listed in the authorized communication information and that the UPF deletes the data.

In an example, the SMF performs the packet discarding processing on the data based on a first indication.

S505: The SMF sends the report information to the NEF, so that the NEF receives the report information from the SMF. In an example, the SMF reports the report information to the third-party device based on the second indication.

In an example, the SMF sends the report information to the NEF by using an event report (Nsmf_event_report) message. S506: The NEF sends the report information to the third-party device, so that the third-party device receives the report information from the NEF.

In an example, the NEF sends the report information to the third-party device by using the event report (Nnef_event_report) message.

According to the foregoing method, the UPF detects that the first terminal or the second terminal communicates with the device not listed in the authorized communication information. Further, the SMF and the UPF perform the packet discarding processing on exceptional data, and report the exception to the third-party device. According to the method, the terminal communicates with a device listed in the authorized communication information, so that a communication behavior of the terminal is managed and monitored. After learning the exception, the third-party device takes a corresponding measure (for example, returning the terminal to a factory for maintenance), thereby ensuring stability and security of terminal communication.

Based on the embodiments in FIG. 3 and FIG. 4, FIG. 6 provides a terminal management and control method. In this method, an SMF detects that a first terminal or a second terminal communicates with a device not listed in authorized communication information, performs packet discarding processing on data, and performs reporting to a third-party device.

First, it should be noted that in this method, data is transmitted by using control plane non-access stratum (non-access stratum, NAS) signaling. A transmission path of uplink data is specifically: Data uploaded by a terminal is transmitted to an AMF by using a RAN, then transmitted to an NEF by using the SMF, and finally transmitted to the third-party device by using the NEF. The method may be specifically applied to an internet of things scenario. According to service requirements of the internet of things industry, a small amount of data is sent or received by the terminal. The small amount of data packets may be sent or received by using control plane NAS signaling, so that establishment of a packet data unit session (packet data unit session, PDU session) is avoided, thereby saving resources and shortening a communication response time. A transmission path of downlink data transmission is specifically: The data delivered to the terminal is transmitted to the NEF by using the third-party device, and then is transmitted to the SMF by using the NEF.

As shown in FIG. 6, the method includes the following steps.

S601: The SMF detects that a first terminal or a second terminal communicates with a device not listed in authorized communication information.

Specifically, when receiving uplink data from the first terminal or the second terminal, the SMF matches device information carried in the uplink data with the authorized communication information, and finds that the uplink data carries information about the device not listed in the authorized communication information, for example, an identifier, an IP address, a MAC address, an application identifier, or an application server network address of the device not listed in the authorized communication information, to detect that the first terminal or the second terminal accesses the device not listed in the authorized communication information. When the SMF detects that the second terminal accesses the device not listed in the authorized communication information, the uplink data further carries an identifier of a terminal group, and the SMF determines authorized communication information of the terminal group based on the identifier of the terminal group.

When receiving downlink data sent by a device to the first terminal or the second terminal, the SMF matches device information carried in the downlink data with the authorized communication information, and finds that the downlink data carries information about the device not listed in the authorized communication information, for example, an identifier, an IP address, a MAC address, an application identifier, or an application server network address of the device not listed in the authorized communication information, to detect that the first terminal or the second terminal accepts access of the device not listed in the authorized communication information. When the SMF detects that the second terminal accepts access of the device not listed in the authorized communication information, the downlink data further carries the identifier of the terminal group, and a UPF determines the authorized communication information of the terminal group based on the identifier of the terminal group.

S602: The SMF performs packet discarding processing on data, where the data is data exchanged by the first terminal or the second terminal with the device not listed in the authorized communication information.

Specifically, the SMF deletes the data exchanged by the first terminal or the second terminal with the device not listed in the authorized communication information.

In an example, the SMF performs the packet discarding processing on the data based on a first indication.

S603: The SMF sends report information to the NEF, so that the NEF receives the report information from the SMF. For details, refer to the description in S505. Details are not described again.

The report information is used to indicate that the first terminal or the second terminal communicates with the device not listed in the authorized communication information. For the report information, refer to the description in Method 1 in S302. Details are not described herein again.

S604: The NEF sends the report information to the third-party device, so that the third-party device receives the report information from the NEF. For details, refer to the description in S506. Details are not described again.

According to the foregoing method, the SMF detects that the first terminal or the second terminal communicates with the device not listed in the authorized communication information, further performs the packet discarding processing on exceptional data, and reports the exception to the third-party device. According to the method, the terminal communicates with a device listed in the authorized communication information, so that a communication behavior of the terminal is managed and monitored. After learning the exception, the third-party device takes a corresponding measure (for example, returning the terminal to a factory for maintenance), thereby ensuring stability and security of terminal communication.

The foregoing mainly describes the solutions provided in the embodiments of this application from a perspective of interaction between network elements. It may be understood that, to implement the foregoing functions, the session management network element, the user plane network element, or the third-party device includes corresponding hardware structures and/or software modules for performing the functions. A person skilled in the art should be easily aware that, in combination with the examples of units and algorithm steps described in the embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions of each particular application, but it should not be considered that the implementation goes beyond the scope of this application.

In the embodiments of this application, the session management network element, the user plane network element, and the third-party device may be divided into functional modules based on the foregoing method examples. For example, functional modules corresponding to functions may be obtained through division, or two or more functions may be integrated into one processing module. The integrated module may be implemented in a form of hardware, or may be implemented in a form of a software functional module. It should be noted that, in the embodiments of this application, module division is an example, and is merely logical function division. In actual implementation, another division manner may be used.

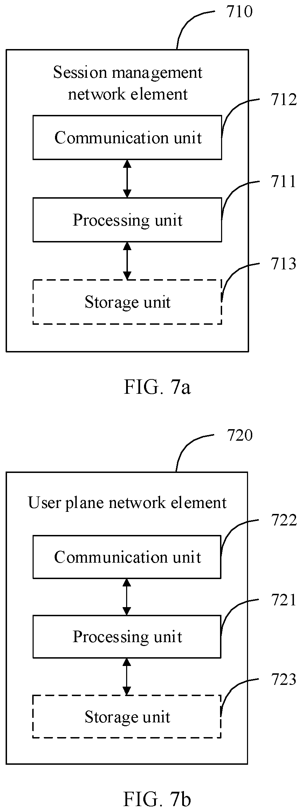

For example, the foregoing network elements or functions may be implemented by using a communication device in FIG. 7. As shown in FIG. 7, the communication device 700 may be a session management network element, a user plane network element, or a third-party device. The communication device includes a processing unit 701 and a communication unit 702, and optionally, further includes a storage unit 703. Further, the communication unit 702 may be divided into a receiving unit and a sending unit which respectively implement functions of receiving information and sending information.

The processing unit 701 is configured to control actions of the foregoing network elements, for example, support the foregoing network elements in performing the methods and the steps provided in the embodiments of this application.

The sending unit 702 is configured to support the network elements in sending information to another network entity, for example, a step in which the network elements send information to another network entity in the embodiments of this application. The receiving unit 703 is configured to support the network elements in receiving information sent by another network entity, for example, a step in which the network elements receive information sent by another network entity in the embodiments of this application. The storage unit 703 is configured to store data and code of the foregoing network elements.

The communication apparatus 700 may be a session management network element. FIG. 7a is a schematic structural diagram of a session management network element 710. The session management network element includes a processing unit 711 and a communication unit 712, and optionally, further includes a storage unit 713.

In an embodiment, the session management network element 710 may be configured to perform operations of the session management network element in the foregoing method embodiments. Examples are as follows:
The processing unit 711 is configured to obtain authorized communication information of a first terminal or a terminal group by using the communication unit 712, where the authorized communication information includes information about a device with which the first terminal or the terminal group is allowed to communicate. For details, refer to S301 in FIG. 3.

When the first terminal or a second terminal in the terminal group communicates with a device not listed in the authorized communication information, the processing unit learns that a management and control measure needs to be taken on communication of the first terminal or the second terminal. For details, refer to S302 in FIG. 3.

The processing unit implements the management and control measure. For details, refer to S303 in FIG. 3.

Further, the session management network element may be configured to perform corresponding steps in FIG. 3, FIG. 4, FIG. 5, or FIG. 6. For details, refer to the descriptions in the foregoing method embodiments. Examples are as follows: The processing unit 711 may be configured to perform S504, S601, and S602. For details, refer to the descriptions in the foregoing steps.

The communication unit 712 may be configured to perform S405, S406, S502, S503, S505, and S603. For details, refer to the descriptions in the foregoing steps.

The communication apparatus 700 may alternatively be a user plane network element. FIG. 7b is a schematic structural diagram of a user plane network element 720. The user plane network element includes a processing unit 721 and a communication unit 722, and optionally, further includes a storage unit 723.

In an embodiment, the user plane network element 720 may be configured to perform operations of the user plane network element in the foregoing method embodiments. Examples are as follows:
The processing unit 721 is configured to obtain authorized communication information of a first terminal or a terminal group by using the communication unit 722, where the authorized communication information includes information about a device with which the first terminal or the terminal group is allowed to communicate. For details, refer to S406 in FIG. 4.

The processing unit detects that the first terminal or a second terminal in the terminal group communicates with a device not listed in the authorized communication information. For details, refer to S501 in FIG. 5.

The processing unit takes a management and control measure on communication of the first terminal or the second terminal. For details, refer to S502 and S504 in FIG. 5.

Further, the user plane network element may be configured to perform corresponding steps in FIG. 3, FIG. 4, FIG. 5, or FIG. 6. For details, refer to the descriptions in the foregoing method embodiments. Examples are as follows:
The processing unit 721 may be configured to perform S504. For details, refer to the descriptions in the foregoing steps. The communication unit 722 may be configured to perform S502, S503, and S504. For details, refer to the descriptions in the foregoing steps.

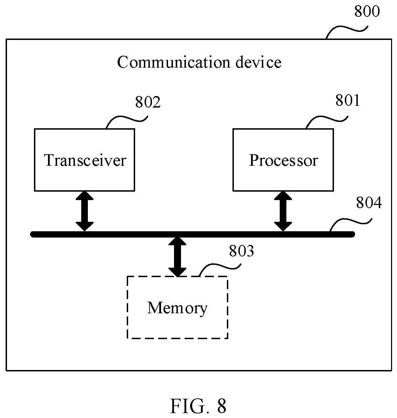

When the processing unit 701, 711, or 721 may be one or more processors, the communication unit 702, 712, or 722 may be one or more transceivers, and the storage unit 703, 713, or 723 may be one or more memories, the session management network element, the user plane network element, or the third-party device in the embodiments of this application may have a structure shown in FIG. 8.

Referring to FIG. 8, the communication device 800 includes a processor 801 and a transceiver 802. Optionally, the communication device 800 may include a memory 803 and a bus 804. The processor 801, the transceiver 802, and the memory 803 are connected by using the bus 804. For example, the processor 801 may be a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to this application. Alternatively, the processor may be a combination of processors implementing a computing function, for example, a combination of one or more microprocessors, or a combination of a DSP and a microprocessor. The bus 804 may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only one thick line is used to represent the bus in FIG. 8, but this does not mean that there is only one bus or only one type of bus.

An embodiment of this application further provides a chip system 900, including at least one processor 901 and an interface circuit 902, where the processor 901 is connected to the interface circuit 902.

The processor 901 may be an integrated circuit chip and has a signal processing capability. In an implementation process, steps in the foregoing methods can be implemented by a hardware integrated logical circuit in the processor 901, or by instructions in a form of software. The processor 901 may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods and steps that are disclosed in the embodiments of this application. The general-purpose processor may be a microprocessor, or the processor may be any conventional processor or the like.

The interface circuit 902 may send or receive data, instructions, or information. The processor 901 may process data, instructions, or other information received through the interface circuit 902, and send, through the interface circuit 902, information obtained after processing.

Optionally, the chip system further includes a memory 903. The memory 903 may include a read-only memory and a random access memory, and provide operation instructions and data for the processor. A part of the memory 903 may further include a non-volatile random access memory (NVRAM).

Optionally, the memory 903 stores an executable software module or a data structure, and the processor 901 may perform a corresponding operation by invoking an operation instruction stored in the memory (the operation instruction may be stored in an operating system).

Optionally, the chip system may be used in the session management network element, the user plane network element, or the third-party device in the embodiments of this application. Optionally, the interface circuit 902 is configured to perform receiving and sending steps of the session management network element, the user plane network element, or the third-party device in the embodiments shown in FIG. 3 to FIG. 6. The processor 901 is configured to perform processing steps of the session management network element, the user plane network element, or the third-party device in the embodiments shown in FIG. 3 to FIG. 6. The memory 903 is configured to store data and instructions of the session management network element, the user plane network element, or the third-party device in the embodiments shown in FIG. 3 to FIG. 6.

An embodiment of this application further provides a computer-readable storage medium. All or some of the methods described in the foregoing method embodiments may be implemented by using software, hardware, firmware, or any combination thereof. If the methods are implemented in software, functions used as one or more instructions or code may be stored in or transmitted on the computer-readable medium. The computer-readable medium may include a computer storage medium and a communication medium, and may further include any medium that can transfer a computer program from one place to another. The storage medium may be any available medium accessible to a computer.

In an optional design, the computer readable medium may include a RAM, a ROM, an EEPROM, a CD-ROM or another optical disc storage, a magnetic disk storage or another magnetic storage device, or any other medium that can be configured to carry or store required program code in a form of an instruction or a data structure and that may be accessed by the computer. In addition, any connection is appropriately referred to as a computer-readable medium. For example, if a coaxial cable, an optical fiber cable, a twisted pair, a digital subscriber line (DSL), or wireless technologies (such as infrared, radio, and a microwave) are used to transmit software from a website, a server, or another remote source, the coaxial cable, the optical fiber cable, the twisted pair, the DSL or the wireless technologies such as infrared, radio, and a microwave are included in a definition of the medium. Magnetic disks and optical discs used in this specification include a compact disk (CD), a laser disk, an optical disc, a digital versatile disc (DVD), a floppy disk, and a Blu-ray disc. The magnetic disks usually magnetically reproduce data, and the optical discs optically reproduce data by using laser light. The foregoing combinations should also be included within the scope of the computer-readable medium.

An embodiment of this application further provides a computer program product. All or some of the method described in the foregoing method embodiments may be implemented by using software, hardware, firmware, or any combination thereof. When the methods are implemented in software, the method may be all or partially implemented in a form of a computer program product. The computer program product includes one or more computer instructions. When the foregoing computer program instruction is loaded and executed on a computer, the procedures or functions described in the foregoing method embodiments are all or partially generated. The foregoing computer may be a general-purpose computer, a special-purpose computer, a computer network, a network device, user equipment or other programmable apparatuses.

The objectives, technical solutions, and advantageous effects of this application are further described in detail in the foregoing specific implementations. It should be understood that the foregoing descriptions are merely specific implementations of this application, but are not intended to limit the protection scope of this application.

## Claims

1. A terminal management and control method performed in a 5G network, comprising:
obtaining (301), by a session management function, SMF, network element (207, 700, 710), authorized communication information of a first terminal (101, 201) or a terminal group, wherein the authorized communication information comprises information about a device with which the first terminal (101, 201) or the terminal group is allowed to communicate so that the first terminal (101, 201) or the terminal group is allowed to commincuate with a device listed in the authorized communication information;
when the first terminal (101, 201) or a second terminal in the terminal group communicates with a device not listed in the authorized communication information, learning (302), by the SMF network element (207, 700, 710), that a management and control measure needs to be taken on communication of the first terminal (101, 201) or the second terminal; and
taking (303), by the SMF network element (207, 700, 710), the management and control measure,
wherein the obtaining (301), by the SMF network element (207, 700, 710), the authorized communication information of the first terminal (101, 201) or the terminal group includes:
receiving (405), by the SMF network element (207, 700, 710), from a policy control function, PCF, network element (210), a session management policy, SM policy, the SM policy includes the authorized communication information of the first terminal or the terminal group.

2. The method according to claim 1, wherein the management and control measure comprises any one or more of the following:
performing packet discarding processing on data, wherein the data is data exchanged by the first terminal (101, 201) or the second terminal with the device not listed in the authorized communication information;
when a quantity of times that the first terminal (101, 201) or the second terminal in the terminal group communicates with the device not listed in the authorized communication information exceeds a preset value, performing the packet discarding processing on the data;
performing reporting to a third-party device (700, 800), wherein the third-party device (700, 800) is a device that manages the first terminal (101, 201) or the terminal group; and
when the quantity of times that the first terminal (101, 201) or the second terminal in the terminal group communicates with the device not listed in the authorized communication information exceeds the preset value, performing the reporting to the third-party device (700, 800).

3. The method according to claim 2, wherein the management and control measure comprises performing the packet discarding processing on the data, and the taking (303), by the SMF network element (207, 700, 710), the management and control measure comprises:
sending, by the SMF network element (207, 700, 710), a notification to a user plane function, UPF, network element (203, 700, 720), wherein the notification is used to indicate to delete the data; or
deleting, by the SMF network element (207, 700, 710), the data.

4. The method according to claim 2 or 3, wherein the management and control measure comprises performing reporting to the third-party device (700, 800), and the taking (303), by the SFM network element (700, 710), the management and control measure comprises:
generating, by the SMF network element (207, 700, 710), report information, and sending the report information to the third-party device (700, 800), wherein the report information is used to indicate that the first terminal (101, 201) or the second terminal communicates with the device not listed in the authorized communication information; or
receiving, by the SMF network element (207, 700, 710), the report information from the UPF network element (203, 700, 720), and sending the report information to the third-party device (700, 800).

5. The method according to any one of claims 1 to 4, wherein the learning (302), by the SMF network element (207, 700, 710), that a management and control measure needs to be taken on communication of the first terminal (101, 201) or the second terminal comprises:
learning, by the SMF network element (207, 700, 710) by receiving the report information from the UPF network element (203, 700, 720), that the management and control measure needs to be taken on communication of the first terminal (101, 201) or the second terminal, wherein the report information is used to indicate that the first terminal (101, 201) or the second terminal communicates with the device not listed in the authorized communication information; or
learning, by the SMF network element (207, 700, 710) by receiving the data, that the management and control measure needs to be taken on communication of the first terminal (101, 201) or the second terminal, wherein the data is the data exchanged by the first terminal (101, 201) or the second terminal with the device not listed in the authorized communication information, and the data carries information about the device not listed in the authorized communication information.

6. The method according to any one of claims 1 to 5, wherein the taking, by the SMF network element (207, 700, 710), the management and control measure comprises:
receiving, by the SMF network element (207, 700, 710), indication information from the third-party device (700, 800), wherein the indication information is used to indicate that the management and control measure is taken when the first terminal (101, 201) or the second terminal communicates with the device not listed in the authorized communication information; and
taking, by the SMF network element (207, 700, 710), the management and control measure based on the indication information.

7. The method according to any one of claims 1 to 6, wherein the obtaining (301), by the SMF network element (207, 700, 710), authorized communication information of a first terminal (101, 201) or a terminal group comprises:
obtaining, by the SMF network element (207, 700, 710), the authorized communication information that is of the first terminal (101, 201) or the terminal group and that is from the third-party device (700, 800); or
locally obtaining, by the SMF network element (207, 700, 710), the authorized communication information of the first terminal (101, 201) or the terminal group.

8. A terminal management and control method performed in a 5G network, comprising:
obtaining, by a user plane function, UPF, network element (203, 700, 720), authorized communication information of a first terminal (101, 201) or a terminal group, wherein the authorized communication information comprises information about a device with which the first terminal (101, 201) or the terminal group is allowed to communicate so that the first terminal (101, 201) or the terminal group is allowed to commincuate with a device listed in the authorized communication information;
detecting (501), by the UPF network element (203, 700, 720), that the first terminal (101, 201) or a second terminal in the terminal group communicates with a device not listed in the authorized communication information; and
taking, by the UPF network element (203, 700, 720), a management and control measure on communication of the first terminal (101, 201) or the second terminal,
wherein the obtaining, by the UPF network element (203, 700, 720), the authorized communication information of the first terminal (101, 201) or the terminal group includes:
receiving (406), by the UPF network element (203, 700, 720), from a session management function, SMF, network element (207, 700, 710), a session management policy, SM policy, the SM policy includes the authorized communication information of the first terminal or the terminal group.

9. The method according to claim 8, wherein the detecting (501), by the UPF network element (203, 700, 720), that the first terminal (101, 201) or a second terminal communicates with a device not listed in the authorized communication information comprises:
receiving, by the UPF network element (203, 700, 720), data, wherein the data is data exchanged by the first terminal (101, 201) or the second terminal with the device not listed in the authorized communication information, and the data carries information about the device not listed in the authorized communication information; and
detecting, by the UPF network element (203, 700, 720) based on the information about the device not listed in the authorized communication information, that the first terminal (101, 201) or the second terminal communicates with the device not listed in the authorized communication information.

10. The method according to claim 9, wherein the management and control measure comprises any one or more of the following:
performing packet discarding processing (504) on the data;
when a quantity of times that the first terminal (101, 201) or the second terminal in the terminal group communicates with the device not listed in the authorized communication information exceeds a preset value, performing the packet discarding processing (504) on the data;
performing reporting to a third-party device (700, 800), wherein the third-party device (700, 800) is a device that manages the first terminal (101, 201) or the terminal group; and
when the quantity of times that the first terminal (101, 201) or the second terminal in the terminal group communicates with the device not listed in the authorized communication information exceeds the preset value, performing the reporting to the third-party device (700, 800).

11. The method according to claim 10, wherein when the management and control measure comprises performing the packet discarding processing (504) on the data, the taking, by the UPF network element (203, 700, 720), a management and control measure comprises:
sending (502), by the UPF network element (203, 700, 720), report information to the SMF network element (207, 700, 710), wherein the report information is used to indicate that the first terminal (101, 201) or the second terminal communicates with the device not listed in the authorized communication information;
receiving, by the UPF network element (203, 700, 720), a notification from the SMF network element (207, 700, 710), wherein the notification is used to indicate to delete the data; and
deleting, by the UPF network element (203, 700, 720), the data based on the notification.

12. The method according to claim 10 or 11, wherein when the management and control measure comprises performing reporting to the third-party device (700, 800), the taking, by the UPF network element (203, 700, 720), a management and control measure comprises:
sending, by the UPF network element (203, 700, 720), report information to the third-party device (203, 700, 800), wherein the report information is used to indicate that the first terminal (101, 201) or the second terminal communicates with the device not listed in the authorized communication information.

13. The method according to any one of claims 8 to 12, wherein the obtaining, by a UPF network element (203, 700, 720), authorized communication information of a first terminal (101, 201) or a terminal group comprises:
obtaining, by the UPF network element (203, 700, 720), the authorized communication information that is of the first terminal (101, 201) or the terminal group and that is from the third-party device (700, 800); or
locally obtaining, by the UPF network element (203, 700, 720), the authorized communication information of the first terminal (101, 201) or the terminal group.

14. A session management function, SMF, network element (207, 700, 710) in a 5G network comprising means for carrying out the method according to any one of claims 1 to 7.

15. A user plane function, UPF, network element (203, 700, 720) in a 5G network comprising means for carrying out the method according to any one of claims 8 to 13.

## Patentansprüche

1. Verfahren zur Verwaltung und Steuerung von Endgeräten, das in einem 5G-Netzwerk durchgeführt wird, umfassend:
Erlangen (301), durch ein Netzwerkelement (207, 700, 710) mit Sitzungsverwaltungsfunktion, SMF, von autorisierten Kommunikationsinformationen eines ersten Endgerätes (101, 201) oder einer Endgerätegruppe, wobei die autorisierten Kommunikationsinformationen Informationen über eine Vorrichtung umfassen, mit der das erste Endgerät (101, 201) oder die Endgerätegruppe kommunizieren darf, sodass das erste Endgerät (101, 201) oder die Endgerätegruppe mit einer in den autorisierten Kommunikationsinformationen aufgeführten Vorrichtung kommunizieren darf;
wenn das erste Endgerät (101, 201) oder ein zweites Endgerät in der Endgerätegruppe mit einer nicht in den autorisierten Kommunikationsinformationen aufgeführten Vorrichtung kommuniziert, Lernen (302), durch das SMF-Netzwerkelement (207, 700, 710), dass eine Verwaltungs- und Steuerungsmaßnahme an der Kommunikation des ersten Endgerätes (101, 201) oder des zweiten Endgerätes ergriffen werden muss; und
Ergreifen (303), durch das SMF-Netzwerkelement (207, 700, 710), der Verwaltungs- und Steuerungsmaßnahme,
wobei das Erlangen (301), durch das SMF-Netzwerkelement (207, 700, 710), der autorisierten Kommunikationsinformationen des ersten Endgerätes (101, 201) oder der Endgerätegruppe Folgendes beinhaltet:
Empfangen (405), durch das SMF-Netzwerkelement (207, 700, 710), von einem Netzwerkelement (210) mit Richtliniensteuerungsfunktion, PCF, einer Sitzungsverwaltungsrichtlinie, SM-Richtlinie, wobei die SM-Richtlinie die autorisierten Kommunikationsinformationen des ersten Endgerätes oder der Endgerätegruppe beinhaltet.

2. Verfahren nach Anspruch 1, wobei die Verwaltungs- und Steuerungsmaßnahme eine oder mehrere beliebige der folgenden Maßnahmen umfasst:
Durchführen einer Paketverwerfungsverarbeitung an Daten, wobei es sich bei den Daten um Daten handelt, die durch das erste Endgerät (101, 201) oder das zweite Endgerät mit der nicht in den autorisierten Kommunikationsinformationen aufgeführten Vorrichtung ausgetauscht wurden;
wenn eine Menge an Malen, die das erste Endgerät (101, 201) oder das zweite Endgerät in der Endgerätegruppe mit der nicht in den autorisierten Kommunikationsinformationen aufgeführten Vorrichtung kommuniziert, einen zuvor festgelegten Wert überschreitet, Durchführen der Paketverwerfungsverarbeitung an den Daten;
Durchführen einer Meldung an eine Drittvorrichtung (700, 800), wobei die Drittvorrichtung (700, 800) eine Vorrichtung ist, die das erste Endgerät (101, 201) oder die Endgerätegruppe verwaltet; und
wenn die Menge an Malen, die das erste Endgerät (101, 201) oder das zweite Endgerät in der Endgerätegruppe mit der nicht in den autorisierten Kommunikationsinformationen aufgeführten Vorrichtung kommuniziert, den zuvor festgelegten Wert überschreitet, Durchführen der Meldung an die Drittvorrichtung (700, 800).

3. Verfahren nach Anspruch 2, wobei die Verwaltungs- und Steuerungsmaßnahme Durchführen der Paketverwerfungsverarbeitung an den Daten umfasst und das Ergreifen (303), durch das SMF-Netzwerkelement (207, 700, 710), der Verwaltungs- und Steuerungsmaßnahme Folgendes umfasst:
Senden, durch das SMF-Netzwerkelement (207, 700, 710), einer Benachrichtigung an ein Netzwerkelement (203, 700, 720) mit Benutzerebenenfunktion, UPF, wobei die Benachrichtigung verwendet wird, um anzugeben, dass die Daten zu löschen sind; oder
Löschen, durch das SMF-Netzwerkelement (207, 700, 710), der Daten.

4. Verfahren nach Anspruch 2 oder 3, wobei die Verwaltungs- und Steuerungsmaßnahme Durchführen einer Meldung an die Drittvorrichtung (700, 800) umfasst und das Ergreifen (303), durch das SFM-Netzwerkelement (700, 710), der Verwaltungs- und Steuerungsmaßnahme Folgendes umfasst:
Generieren, durch das SMF-Netzwerkelement (207, 700, 710), von Berichtsinformationen und Senden der Berichtsinformationen an die Drittvorrichtung (700, 800), wobei die Berichtsinformationen verwendet werden, um anzugeben, dass das erste Endgerät (101, 201) oder das zweite Endgerät mit der nicht in den autorisierten Kommunikationsinformationen aufgeführten Vorrichtung kommuniziert; oder
Empfangen, durch das SMF-Netzwerkelement (207, 700, 710), der Berichtsinformationen von dem UPF-Netzwerkelement (203, 700, 720) und Senden der Berichtsinformationen an die Drittvorrichtung (700, 800).

5. Verfahren nach einem der Ansprüche 1 bis 4, wobei das Lernen (302), durch das SMF-Netzwerkelement (207, 700, 710), dass eine Verwaltungs- und Steuerungsmaßnahme an der Kommunikation des ersten Endgerätes (101, 201) oder des zweiten Endgerätes ergriffen werden muss, Folgendes umfasst:
Lernen, durch das SMF-Netzwerkelement (207, 700, 710) durch Empfangen der Berichtsinformationen von dem UPF-Netzwerkelement (203, 700, 720), dass die Verwaltungs- und Steuerungsmaßnahme an der Kommunikation des ersten Endgerätes (101, 201) oder des zweiten Endgerätes ergriffen werden muss, wobei die Berichtsinformationen verwendet werden, um anzugeben, dass das erste Endgerät (101, 201) oder das zweite Endgerät mit der nicht in den autorisierten Kommunikationsinformationen aufgeführten Vorrichtung kommuniziert; oder
Lernen, durch das SMF-Netzwerkelement (207, 700, 710) durch Empfangen der Daten, dass die Verwaltungs- und Steuerungsmaßnahme an der Kommunikation des ersten Endgerätes (101, 201) oder des zweiten Endgerätes ergriffen werden muss, wobei es sich bei den Daten um Daten handelt, die durch das erste Endgerät (101, 201) oder das zweite Endgerät mit der nicht in den autorisierten Kommunikationsinformationen aufgeführten Vorrichtung ausgetauscht wurden, und die Daten Informationen über die nicht in den autorisierten Kommunikationsinformationen aufgeführte Vorrichtung tragen.

6. Verfahren nach einem der Ansprüche 1 bis 5, wobei das Ergreifen, durch das SMF-Netzwerkelement (207, 700, 710), der Verwaltungs- und Steuerungsmaßnahme Folgendes umfasst:
Empfangen, durch das SMF-Netzwerkelement (207, 700, 710), von Angabeinformationen von der Drittvorrichtung (700, 800), wobei die Angabeinformationen verwendet werden, um anzugeben, dass die Verwaltungs- und Steuerungsmaßnahme ergriffen wird, wenn das erste Endgerät (101, 201) oder das zweite Endgerät mit der nicht in den autorisierten Kommunikationsinformationen aufgeführten Vorrichtung kommuniziert; und
Ergreifen, durch das SMF-Netzwerkelement (207, 700, 710), der Verwaltungs- und Steuerungsmaßnahme basierend auf den Angabeinformationen.

7. Verfahren nach einem der Ansprüche 1 bis 6, wobei das Erlangen (301), durch das SMF-Netzwerkelement (207, 700, 710), von autorisierten Kommunikationsinformationen eines ersten Endgerätes (101, 201) oder einer Endgerätegruppe Folgendes umfasst:
Erlangen, durch das SMF-Netzwerkelement (207, 700, 710), der autorisierten Kommunikationsinformationen, die von dem ersten Endgerät (101, 201) oder der Endgerätegruppe stammen und die von der Drittvorrichtung (700, 800) stammen; oder
lokales Erlangen, durch das SMF-Netzwerkelement (207, 700, 710), der autorisierten Kommunikationsinformationen des ersten Endgerätes (101, 201) oder der Endgerätegruppe.

8. Verfahren zur Verwaltung und Steuerung von Endgeräten, das in einem 5G-Netzwerk durchgeführt wird, umfassend:
Erlangen, durch ein Netzwerkelement (203, 700, 720) mit Benutzerebenenfunktion, UPF, von autorisierten Kommunikationsinformationen eines ersten Endgerätes (101, 201) oder einer Endgerätegruppe, wobei die autorisierten Kommunikationsinformationen Informationen über eine Vorrichtung umfassen, mit der das erste Endgerät (101, 201) oder die Endgerätegruppe kommunizieren darf, sodass das erste Endgerät (101, 201) oder die Endgerätegruppe mit einer in den autorisierten Kommunikationsinformationen aufgeführten Vorrichtung kommunizieren darf;
Detektieren (501), durch das UPF-Netzwerkelement (203, 700, 720), dass das erste Endgerät (101, 201) oder ein zweites Endgerät in der Endgerätegruppe mit einer nicht in den autorisierten Kommunikationsinformationen aufgeführten Vorrichtung kommuniziert; und
Ergreifen, durch das UPF-Netzwerkelement (203, 700, 720), einer Verwaltungs- und Steuerungsmaßnahme an der Kommunikation des ersten Endgerätes (101, 201) oder des zweiten Endgerätes,
wobei das Erlangen, durch das UPF-Netzwerkelement (203, 700, 720), der autorisierten Kommunikationsinformationen des ersten Endgerätes (101, 201) oder der Endgerätegruppe Folgendes beinhaltet:
Empfangen (406), durch das UPF-Netzwerkelement (203, 700, 720), von einem Netzwerkelement (207, 700, 710) mit Sitzungsverwaltungsfunktion, SMF, einer Sitzungsverwaltungsrichtlinie, SM-Richtlinie, wobei die SM-Richtlinie die autorisierten Kommunikationsinformationen des ersten Endgerätes oder der Endgerätegruppe beinhaltet.

9. Verfahren nach Anspruch 8, wobei das Detektieren (501), durch das UPF-Netzwerkelement (203, 700, 720), dass das erste Endgerät (101, 201) oder ein zweites Endgerät mit einer nicht in den autorisierten Kommunikationsinformationen aufgeführten Vorrichtung kommuniziert, Folgendes umfasst:
Empfangen, durch das UPF-Netzwerkelement (203, 700, 720), von Daten, wobei es sich bei den Daten um Daten handelt, die durch das erste Endgerät (101, 201) oder durch das zweite Endgerät mit der nicht in den autorisierten Kommunikationsinformationen aufgeführten Vorrichtung ausgetauscht wurden, und die Daten Informationen über die nicht in den autorisierten Kommunikationsinformationen aufgeführte Vorrichtung tragen; und
Detektieren, durch das UPF-Netzwerkelement (203, 700, 720) basierend auf den Informationen über die nicht in den autorisierten Kommunikationsinformationen aufgeführte Vorrichtung, dass das erste Endgerät (101, 201) oder das zweite Endgerät mit der nicht in den autorisierten Kommunikationsinformationen aufgeführten Vorrichtung kommuniziert.

10. Verfahren nach Anspruch 9, wobei die Verwaltungs- und Steuerungsmaßnahme eine oder mehrere beliebige der folgenden Maßnahmen umfasst:
Durchführen einer Paketverwerfungsverarbeitung (504) an den Daten;
wenn eine Menge an Malen, die das erste Endgerät (101, 201) oder das zweite Endgerät in der Endgerätegruppe mit der nicht in den autorisierten Kommunikationsinformationen aufgeführten Vorrichtung kommuniziert, einen zuvor festgelegten Wert überschreitet, Durchführen der Paketverwerfungsverarbeitung (504) an den Daten;
Durchführen einer Meldung an eine Drittvorrichtung (700, 800), wobei die Drittvorrichtung (700, 800) eine Vorrichtung ist, die das erste Endgerät (101, 201) oder die Endgerätegruppe verwaltet; und
wenn die Menge an Malen, die das erste Endgerät (101, 201) oder das zweite Endgerät in der Endgerätegruppe mit der nicht in den autorisierten Kommunikationsinformationen aufgeführten Vorrichtung kommuniziert, den zuvor festgelegten Wert überschreitet, Durchführen der Meldung an die Drittvorrichtung (700, 800).

11. Verfahren nach Anspruch 10, wobei, wenn die Verwaltungs- und Steuerungsmaßnahme Durchführen der Paketverwerfungsverarbeitung (504) an den Daten umfasst, das Ergreifen, durch das UPF-Netzwerkelement (203, 700, 720), einer Verwaltungs- und Steuerungsmaßnahme Folgendes umfasst:
Senden (502), durch das UPF-Netzwerkelement (203, 700, 720), von Berichtsinformationen an das SMF-Netzwerkelement (207, 700, 710), wobei die Berichtsinformationen verwendet werden, um anzugeben, dass das erste Endgerät (101, 201) oder das zweite Endgerät mit der nicht in den autorisierten Kommunikationsinformationen aufgeführten Vorrichtung kommuniziert;
Empfangen, durch das UPF-Netzwerkelement (203, 700, 720), einer Benachrichtigung von dem SMF-Netzwerkelement (207, 700, 710), wobei die Benachrichtigung verwendet wird, um anzugeben, dass die Daten zu löschen sind; und
Löschen, durch das UPF-Netzwerkelement (203, 700, 720), der Daten basierend auf der Benachrichtigung.

12. Verfahren nach Anspruch 10 oder 11, wobei, wenn die Verwaltungs- und Steuerungsmaßnahme Durchführen einer Meldung an die Drittvorrichtung (700, 800) umfasst, das Ergreifen, durch das UPF-Netzwerkelement (203, 700, 720), einer Verwaltungs- und Steuerungsmaßnahme Folgendes umfasst:
Senden, durch das UPF-Netzwerkelement (203, 700, 720), von Berichtsinformationen an die Drittvorrichtung (203, 700, 800), wobei die Berichtsinformationen verwendet werden, um anzugeben, dass das erste Endgerät (101, 201) oder das zweite Endgerät mit der nicht in den autorisierten Kommunikationsinformationen aufgeführten Vorrichtung kommuniziert.

13. Verfahren nach einem der Ansprüche 8 bis 12, wobei das Erlangen, durch ein UPF-Netzwerkelement (203, 700, 720), von autorisierten Kommunikationsinformationen eines ersten Endgerätes (101, 201) oder einer Endgerätegruppe Folgendes umfasst:
Erlangen, durch das UPF-Netzwerkelement (203, 700, 720), der autorisierten Kommunikationsinformationen, die von dem ersten Endgerät (101, 201) oder der Endgerätegruppe stammen und die von der Drittvorrichtung (700, 800) stammen; oder
lokales Erlangen, durch das UPF-Netzwerkelement (203, 700, 720), der autorisierten Kommunikationsinformationen des ersten Endgerätes (101, 201) oder der Endgerätegruppe.

14. Netzwerkelement (207, 700, 710) mit Sitzungsverwaltungsfunktion, SMF, in einem 5G-Netzwerk, das Mittel zum Ausführen des Verfahrens nach einem der Ansprüche 1 bis 7 umfasst.

15. Netzwerkelement (203, 700, 720) mit Benutzerebenenfunktion, UPF, in einem 5G-Netzwerk, das Mittel zum Ausführen des Verfahrens nach einem der Ansprüche 8 bis 13 umfasst.

## Revendications

1. Procédé de gestion et de commande de terminal mis en œuvre dans un réseau 5G, comprenant :
l'obtention (301), par un élément de réseau de fonction de gestion de session, SMF, (207, 700, 710), d'informations de communication autorisées d'un premier terminal (101, 201) ou d'un groupe de terminaux, dans lequel les informations de communication autorisées comprennent des informations sur un dispositif avec lequel le premier terminal (101, 201) ou le groupe de terminaux est autorisé à communiquer de sorte que le premier terminal (101, 201) ou le groupe de terminaux est autorisé à communiquer avec un dispositif répertorié dans les informations de communication autorisées ;
lorsque le premier terminal (101, 201) ou un second terminal dans le groupe de terminaux communique avec un dispositif non répertorié dans les informations de communication autorisées, l'apprentissage (302), par l'élément de réseau SMF (207, 700, 710), qu'une mesure de gestion et de commande doit être prise sur la communication du premier terminal (101, 201) ou du second terminal ; et
la prise (303), par l'élément de réseau SMF (207, 700, 710), de la mesure de gestion et de commande,
dans lequel l'obtention (301), par l'élément de réseau SMF (207, 700, 710), des informations de communication autorisées du premier terminal (101, 201) ou du groupe de terminaux comporte : la réception (405), par l'élément de réseau SMF (207, 700, 710), à partir d'un élément de réseau de fonction de commande de politique, PCF, (210), d'une politique de gestion de session, politique SM, la politique SM comporte les informations de communication autorisées du premier terminal ou du groupe de terminaux.

2. Procédé selon la revendication 1, dans lequel la mesure de gestion et de commande comprend un ou plusieurs des éléments suivants :
l'exécution d'un traitement de suppression de paquets sur des données, dans lequel les données sont des données échangées par le premier terminal (101, 201) ou le second terminal avec le dispositif non répertorié dans les informations de communication autorisées ;
lorsqu'une quantité de fois que le premier terminal (101, 201) ou le second terminal dans le groupe de terminaux communique avec le dispositif non répertorié dans les informations de communication autorisées dépasse une valeur prédéfinie, l'exécution du traitement de suppression de paquets sur les données ;
l'exécution d'un rapport sur un dispositif tiers (700, 800), dans lequel le dispositif tiers (700, 800) est un dispositif qui gère le premier terminal (101, 201) ou le groupe de terminaux ; et
lorsque la quantité de fois que le premier terminal (101, 201) ou le second terminal dans le groupe de terminaux communique avec le dispositif non répertorié dans les informations de communication autorisées dépasse la valeur prédéfinie, l'exécution du rapport au dispositif tiers (700, 800).

3. Procédé selon la revendication 2, dans lequel la mesure de gestion et de commande comprend l'exécution du traitement de suppression de paquets sur les données, et la prise (303), par l'élément de réseau SMF (207, 700, 710), la mesure de gestion et de commande comprend :
l'envoi, par l'élément de réseau SMF (207, 700, 710), d'une notification à un élément de réseau de fonction de plan utilisateur, UPF (203, 700, 720), dans lequel la notification est utilisée pour indiquer de supprimer les données ; ou
la suppression, par l'élément de réseau SMF (207, 700, 710), des données.

4. Procédé selon la revendication 2 ou 3, dans lequel la mesure de gestion et de commande comprend l'exécution d'un rapport au dispositif tiers (700, 800), et la prise (303), par l'élément de réseau SFM (700, 710), la mesure de gestion et de commande comprend :
la génération, par l'élément de réseau SMF (207, 700, 710), d'informations de rapport et l'envoi des informations de rapport au dispositif tiers (700, 800), dans lequel les informations de rapport sont utilisées pour indiquer que le premier terminal (101, 201) ou le second terminal communique avec le dispositif non répertorié dans les informations de communication autorisées ; ou
la réception, par l'élément de réseau SMF (207, 700, 710), des informations de rapport provenant de l'élément de réseau UPF (203, 700, 720), et l'envoi des informations de rapport au dispositif tiers (700, 800).

5. Procédé selon l'une quelconque des revendications 1 à 4, dans lequel l'apprentissage (302), par l'élément de réseau SMF (207, 700, 710), qu'une mesure de gestion et de commande doit être prise sur la communication du premier terminal (101, 201) ou du second terminal comprend :
l'apprentissage, par l'élément de réseau SMF (207, 700, 710) en recevant les informations de rapport de l'élément de réseau UPF (203, 700, 720), que la mesure de gestion et de commande doit être prise sur la communication du premier terminal (101, 201) ou du second terminal, dans lequel les informations de rapport sont utilisées pour indiquer que le premier terminal (101, 201) ou le second terminal communique avec le dispositif non répertorié dans les informations de communication autorisées ;
ou
l'apprentissage, par l'élément de réseau SMF (207, 700, 710) en recevant les données, que la mesure de gestion et de commande doit être prise sur la communication du premier terminal (101, 201) ou du second terminal, dans lequel les données sont les données échangées par le premier terminal (101, 201) ou le second terminal avec le dispositif non répertorié dans les informations de communication autorisées, et les données transportent des informations sur le dispositif non répertorié dans les informations de communication autorisées.

6. Procédé selon l'une quelconque des revendications 1 à 5, dans lequel la prise, par l'élément de réseau SMF (207, 700, 710), de la mesure de gestion et de commande comprend :
la réception, par l'élément de réseau SMF (207, 700, 710), d'informations d'indication provenant du dispositif tiers (700, 800), dans lequel les informations d'indication sont utilisées pour indiquer que la mesure de gestion et de commande est prise lorsque le premier terminal (101, 201) ou le second terminal communique avec le dispositif non répertorié dans les informations de communication autorisées ; et
la prise, par l'élément de réseau SMF (207, 700, 710), de la mesure de gestion et de commande sur la base des informations d'indication.

7. Procédé selon l'une quelconque des revendications 1 à 6, dans lequel l'obtention (301), par l'élément de réseau SMF (207, 700, 710), d'informations de communication autorisées d'un premier terminal (101, 201) ou d'un groupe de terminaux comprend :
l'obtention, par l'élément de réseau SMF (207, 700, 710), des informations de communication autorisées qui sont du premier terminal (101, 201) ou du groupe de terminaux et qui proviennent du dispositif tiers (700, 800) ; ou
l'obtention locale, par l'élément de réseau SMF (207, 700, 710), des informations de communication autorisées du premier terminal (101, 201) ou du groupe de terminaux.

8. Procédé de gestion et de commande de terminal exécuté dans un réseau 5G, comprenant :
l'obtention, par un élément de réseau de fonction de plan utilisateur, UPF, (203, 700, 720), d'informations de communication autorisées d'un premier terminal (101, 201) ou d'un groupe de terminaux, dans lequel les informations de communication autorisées comprennent des informations sur un dispositif avec lequel le premier terminal (101, 201) ou le groupe de terminaux est autorisé à communiquer de sorte que le premier terminal (101, 201) ou le groupe de terminaux est autorisé à communiquer avec un dispositif répertorié dans les informations de communication autorisées ;
la détection (501), par l'élément de réseau UPF (203, 700, 720), que le premier terminal (101, 201) ou un second terminal dans le groupe de terminaux communique avec un dispositif non répertorié dans les informations de communication autorisées ; et
la prise, par l'élément de réseau UPF (203, 700, 720), d'une mesure de gestion et de commande sur la communication du premier terminal (101, 201) ou du second terminal,
dans lequel l'obtention, par l'élément de réseau UPF (203, 700, 720), des informations de communication autorisées du premier terminal (101, 201) ou du groupe de terminaux comporte :
la réception (406), par l'élément de réseau UPF (203, 700, 720), à partir d'un élément de réseau de fonction de gestion de session, SMF, (207, 700, 710), d'une politique de gestion de session, politique SM, la politique SM comporte les informations de communication autorisées du premier terminal ou du groupe de terminaux.

9. Procédé selon la revendication 8, dans lequel la détection (501), par l'élément de réseau UPF (203, 700, 720), que le premier terminal (101, 201) ou un second terminal communique avec un dispositif non répertorié dans les informations de communication autorisées comprend :
la réception, par l'élément de réseau UPF (203, 700, 720), de données, dans lequel les données sont des données échangées par le premier terminal (101, 201) ou le second terminal avec le dispositif non répertorié dans les informations de communication autorisées, et les données transportent des informations sur le dispositif non répertorié dans les informations de communication autorisées ; et
la détection, par l'élément de réseau UPF (203, 700, 720) sur la base des informations sur le dispositif non répertorié dans les informations de communication autorisées, que le premier terminal (101, 201) ou le second terminal communique avec le dispositif non répertorié dans les informations de communication autorisées.

10. Procédé selon la revendication 9, dans lequel la mesure de gestion et de commande comprend un ou plusieurs des éléments suivants :
l'exécution d'un traitement de suppression de paquets (504) sur les données ;
lorsqu'une quantité de fois que le premier terminal (101, 201) ou le second terminal dans le groupe de terminaux communique avec le dispositif non répertorié dans les informations de communication autorisées dépasse une valeur prédéfinie, l'exécution du traitement de suppression de paquets (504) sur les données ;
l'exécution d'un rapport sur un dispositif tiers (700, 800), dans lequel le dispositif tiers (700, 800) est un dispositif qui gère le premier terminal (101, 201) ou le groupe de terminaux ;
et
lorsque la quantité de fois que le premier terminal (101, 201) ou le second terminal dans le groupe de terminaux communique avec le dispositif non répertorié dans les informations de communication autorisées dépasse la valeur prédéfinie, l'exécution du rapport au dispositif tiers (700, 800).

11. Procédé selon la revendication 10, dans lequel lorsque la mesure de gestion et de commande comprend l'exécution du traitement de suppression de paquets (504) sur les données, la prise, par l'élément de réseau UPF (203, 700, 720), d'une mesure de gestion et de commande comprend :
l'envoi (502), par l'élément de réseau UPF (203, 700, 720), d'informations de rapport à l'élément de réseau SMF (207, 700, 710), dans lequel les informations de rapport sont utilisées pour indiquer que le premier terminal (101, 201) ou le second terminal communique avec le dispositif non répertorié dans les informations de communication autorisées ;
la réception, par l'élément de réseau UPF (203, 700, 720), d'une notification de l'élément de réseau SMF (207, 700, 710), dans lequel la notification est utilisée pour indiquer de supprimer les données ; et
la suppression, par l'élément de réseau UPF (203, 700, 720), des données sur la base de la notification.

12. Procédé selon la revendication 10 ou 11, dans lequel lorsque la mesure de gestion et de commande comprend l'exécution d'un rapport au dispositif tiers (700, 800), la prise, par l'élément de réseau UPF (203, 700, 720), d'une mesure de gestion et de commande comprend :
l'envoi, par l'élément de réseau UPF (203, 700, 720), d'informations de rapport au dispositif tiers (203, 700, 800), dans lequel les informations de rapport sont utilisées pour indiquer que le premier terminal (101, 201) ou le second terminal communique avec le dispositif non répertorié dans les informations de communication autorisées.

13. Procédé selon l'une quelconque des revendications 8 à 12, dans lequel l'obtention, par un élément de réseau UPF (203, 700, 720), d'informations de communication autorisées d'un premier terminal (101, 201) ou d'un groupe de terminaux comprend :
l'obtention, par l'élément de réseau UPF (203, 700, 720), des informations de communication autorisées qui sont du premier terminal (101, 201) ou du groupe de terminaux et qui proviennent du dispositif tiers (700, 800) ; ou
l'obtention locale, par l'élément de réseau UPF (203, 700, 720), des informations de communication autorisées du premier terminal (101, 201) ou du groupe de terminaux.

14. Élément de réseau de fonction de gestion de session, SMF, (207, 700, 710) dans un réseau 5G comprenant un moyen pour mettre en œuvre le procédé selon l'une quelconque des revendications 1 à 7.

15. Élément de réseau de fonction de plan utilisateur, UPF, (203, 700, 720) dans un réseau 5G comprenant un moyen pour mettre en œuvre le procédé selon l'une quelconque des revendications 8 à 13.
